# FASCICULE DE BREVET EUROPEEN

(11) **EP 4 354 688 B1**
(45) Date de publication et mention de la délivrance du brevet: **04.11.2026**
(21) Numéro de dépôt: 23200640.3
(22) Date de dépôt: 28.09.2023
(51) Int. Cl.: H02J 3/32, H02J 3/38, H02J 3/48, B66C 13/22, B66C 13/12

(54) **PROCÉDÉ AUTOMATIQUE DE GESTION ÉCOLOGIQUE DE PUISSANCE POUR UNE GRUE**
AUTOMATISCHES VERFAHREN ZUR ÖKOLOGISCHEN LEISTUNGSVERWALTUNG FÜR EINEN KRAN
AUTOMATIC ECOLOGICAL POWER MANAGEMENT METHOD FOR CRANE

(30) Priorité: 12.10.2022 FR 2210468
(43) Date de publication de la demande: 17.04.2024
(73) Titulaire: Manitowoc Crane Group France, 69570 Dardilly (FR)
(72) Inventeur: RONI-DAMOND, Bruno, 69002 LYON (FR)
(74) Mandataire: Germain Maureau

(56) Documents cités:
- EP-A1- 4 056 516
- FR-A1- 2 999 029
- GB-A- 2 508 577
- US-A1- 2017 275 140

## Description

### [Domaine technique]

L'invention se rapporte à un procédé automatique de gestion de puissance pour l'alimentation en puissance d'une grue.

Elle se rapporte plus particulièrement à un procédé automatique permettant l'usage d'un groupe électrogène et d'une source d'alimentation secondaire rechargeable pour une alimentation en puissance de la grue qui soit moins énergivore et plus écologique possible.

L'invention trouve une application favorite, et non limitative, pour les grues à montage par éléments et les grues à montage automatisé.

### [Etat de la technique]

Aujourd'hui, les entreprises doivent se conformer positivement à de nouvelles réglementations pour amorcer leur transition écologique et mettre en pratique des comportements en faveur du développement durable, dans le but d'apporter une solution globale et pérenne aux grands enjeux environnementaux de ce siècle. La transition écologique vise à mettre en place un modèle de développement économique, social, résilient et durable qui repense positivement la façon de consommer, de produire, de travailler et de vivre ensemble, en particulier sur les terrains de la réduction des consommations énergétiques et des émissions polluantes.

De manière connue, les grues sur les chantiers peuvent être alimentées énergétiquement soit par le réseau électrique, soit par un groupe électrogène.

Cependant, dans certains cas de figure, il n'est pas possible de raccorder la grue à un réseau électrique disponible, et il est donc indispensable de recourir à des sources d'énergie autonomes, comme un groupe électrogène fonctionnant avec un carburant de type essence ou diesel. Dans ce cas de figure, il est donc nécessaire de dimensionner le groupe électrogène en fonction du besoin d'énergie électrique de la grue.

Or les moteurs endothermiques dont sont équipés les groupes électrogènes sont conçus pour fonctionner de manière optimale lorsqu'ils délivrent une puissance comprise dans une plage de puissance optimale, généralement entre 60 % et 95 % de la puissance maximale déclarée. Lorsqu'ils travaillent en dehors de cette plage de puissance optimale, les groupes électrogènes consomment davantage de carburant et polluent plus en émettant davantage de particules et de produits nocifs. Eventuellement, le moteur du groupe électrogène peut aussi s'endommager en s'encrassant.

Or, les grues ont un fonctionnement énergétique peu adapté à l'alimentation par un groupe électrogène. En effet, les grues alternent des phases d'attente pour lesquelles elles requièrent peu ou pas de puissance pour fonctionner (donc en-deçà de la plage de puissance optimale), avec des phases durant lesquelles elles sont en travail et qui se caractérisent par des pics de puissance de consommation (donc au-delà de la plage de puissance optimale), l'intensité des pics de puissance étant fonction de l'ensemble des actions qu'effectue la grue simultanément (par exemple le levage d'une charge, ou alors le levage d'une charge combiné à une rotation de la flèche, etc.).

Eventuellement, le moteur du groupe électrogène, lorsqu'il fonctionne hors de sa plage optimale, peut aussi s'endommager en s'encrassant. Dans le pire cas, le groupe électrogène peut tomber en panne ou ne plus être utilisable. Là encore, une telle situation ne s'inscrit pas favorablement dans une logique de développement durable car elle implique de fabriquer un nouveau groupe électrogène.

Afin d'être en capacité d'absorber un pic de puissance maximal correspondant à tous les mouvements possibles que pourrait réaliser simultanément la grue, les groupes électrogènes sont classiquement surdimensionnés avec une capacité à délivrer une puissance principale pouvant atteindre une valeur maximale principale supérieure à 1,5 fois, voire 3 fois, la puissance maximale nécessaire à un fonctionnement nominal de la grue, en fonction notamment des technologies d'alimentation de puissance des actionneurs que comprend la grue.

Ce surdimensionnement a pour impact que le groupe électrogène fonctionne la plupart du temps à vide ou à faible puissance hors de sa plage de puissance optimale, au mieux à 50 % de sa valeur maximale principale. Par conséquent, les consommations des groupes électrogènes sont élevées et les risques de pollution ou d'endommagement du groupe électrogène importants. Le surdimensionnement se traduit également par un surdimensionnement physique / une augmentation de la taille du groupe électrogène, nécessitant par exemple une plus grande quantité de matériaux pour fabriquer son moteur, son alternateur, etc.

Afin de ne pas surdimensionner le groupe électrogène, une solution consiste à rajouter à audit groupe électrogène, qualifié de source d'alimentation principale, une source d'alimentation auxiliaire ou secondaire rechargeable pour augmenter la puissance d'alimentation fournie à la grue.

Ainsi, il est connu de GB 2508577 A un procédé automatique de gestion de puissance conforme au préambule de la revendication 1. On citera également ici le document FR2999029A1.

Il est également envisageable de faire intervenir dans le procédé automatique de gestion de puissance plusieurs sources d'alimentation principales et secondaires, comme proposé par US 2017/0275140 A1.

Cependant, les procédés proposés dans ces documents de l'état de la technique ne s'intéressent pas à la plage de puissance optimale du groupe électrogène, de sorte que ce dernier peut travailler en dehors de sa plage de puissance optimale, avec les inconvénients et problématiques mentionnés plus haut.

### [Résumé de l'invention]

L'invention propose ainsi de s'inscrire dans une démarche à la fois écologique et économique, en apportant une solution pour l'alimentation en puissance d'une grue qui soit moins consommatrice en énergie, moins émissive en polluant et également faisant appel à moins de matières premières pour sa conception.

Dans le but de résoudre ces problèmes de consommation et de pollution engendrés par les groupes électrogènes, et de prévenir leur éventuel endommagement, l'invention proposée concerne un procédé automatique de gestion de puissance pour l'alimentation d'une grue requérant pour fonctionner et déplacer une charge une puissance de fonctionnement pouvant atteindre une valeur maximale de fonctionnement, lequel procédé automatique fait intervenir :
- une source d'alimentation principale comprenant un groupe électrogène muni d'un moteur endothermique apte à fournir à la grue un courant alternatif principal pour une puissance principale pouvant atteindre une valeur maximale principale ; le groupe électrogène étant dimensionné en fonction d'un rapport de puissance tel que la valeur maximale principale est égale à la valeur maximale de fonctionnement multipliée par ledit rapport de puissance qui est inférieur à 1,2, et le groupe électrogène présente une plage de puissance optimale bornée par une valeur optimale minimale et une valeur optimale maximale qui est inférieure à la valeur maximale principale ;
- une source d'alimentation secondaire comprenant au moins une batterie électrique rechargeable, qui présente un niveau de charge compris entre zéro et un niveau de charge maximal, et qui est apte à fournir un courant alternatif secondaire pour délivrer une puissance secondaire et apte à recevoir une puissance de charge pour être rechargée électriquement ;
le procédé automatique mettant en œuvre un mode de gestion de puissance, dit mode principal, dans lequel :
- si la puissance de fonctionnement présente une valeur de fonctionnement comprise dans la plage de puissance optimale du groupe électrogène, et si le niveau de charge est supérieur à un premier seuil de charge, alors
- la grue est électriquement connectée au seul groupe électrogène afin qu'elle reçoive du groupe électrogène la puissance principale qui est égale à la valeur de fonctionnement, ledit groupe électrogène fonctionnant alors dans sa plage de puissance optimale.

Autrement dit, la grue requière une puissance de fonctionnement pour fonctionner et réaliser une action donnée, comme le levage d'une charge par exemple. La puissance de fonctionnement est définie par une valeur de fonctionnement variable qui correspond à la somme de puissances d'alimentation à fournir à un ensemble d'équipements électriques intervenant dans la réalisation de l'action que doit effectuer la grue. La valeur de fonctionnement peut atteindre une valeur maximale de fonctionnement, qui correspond, parmi toutes les actions que peut possiblement réaliser la grue, à celle demandant le plus de puissance d'alimentation (c'est-à-dire pour laquelle la somme de puissances d'alimentation est la plus élevée).

Afin d'alimenter la grue, et donc ses équipements électriques, le procédé automatique de gestion de puissance proposé fait intervenir :
- un groupe électrogène correspondant à la source d'alimentation principale de la grue, et capable de fournir une puissance principale à celle-ci pouvant atteindre une valeur maximale principale,
- mais également une source d'alimentation secondaire constituée par au moins une batterie rechargeable et présentant un niveau de charge, et délivrant à la grue une puissance secondaire.

Dans la suite de la description, il est bien clair que la source d'alimentation principale correspond au groupe électrogène.

Comme indiqué plus loin, la source d'alimentation secondaire a pour rôle de délivrer une puissance secondaire à la grue dans le cas où la valeur de fonctionnement dépasserait la valeur optimale maximale pouvant être fournie par le groupe électrogène, de manière à ce que le groupe électrogène reste dans sa plage de puissance optimale.

Selon différentes variantes de réalisation de l'invention, dans le cas où une telle situation se présente, le groupe électrogène est conformé pour fournir une valeur principale (pouvant être égale ou inférieure à la valeur optimale maximale) tandis que la source d'alimentation secondaire doit délivrer à la grue une puissance secondaire égale à la valeur de fonctionnement moins la valeur principale.

L'utilisation d'une source d'alimentation secondaire a donc pour intérêt de limiter significativement le surdimensionnement du groupe électrogène, et donc de favoriser l'usage de groupes électrogènes de plus petite taille.

Ainsi, dans le cadre du procédé automatique, le groupe électrogène est dimensionné de sorte que le rapport de puissance entre la valeur maximale principale et la valeur maximale de fonctionnement soit inférieur ou égal à 1,2.

Avantageusement, dans d'autres modes de réalisation de l'invention, le groupe électrogène peut ne pas être surdimensionné (le rapport de puissance étant alors égal à 1), ou bien être sous-dimensionné (avec un rapport de puissance inférieur à 1).

Avantageusement, un des intérêts du procédé automatique de gestion de puissance est donc de favoriser l'usage de groupes électrogènes de plus petite taille présentant un bilan carbone lié à leur fabrication beaucoup plus réduit (puisque leur fabrication nécessite moins de matériaux à extraire, et/ou à traiter, et/ou à acheminer...), contribuant ainsi à inscrire l'alimentation en puissance de la grue dans une démarche positive en faveur du développement durable.

Comme précédemment indiqué, un groupe électrogène consomme moins de carburant, et donc pollue moins, lorsque la puissance qu'il délivre, ici la puissance principale, est comprise dans la plage de puissance optimale, laquelle est bornée par : une valeur optimale minimale, et une valeur optimale maximale qui est inférieure à la valeur maximale principale.

Le procédé automatique de l'invention est défini tel qu'il comprend le mode de gestion de puissance, dit mode principal, dans lequel seul le groupe électrogène est raccordé électriquement à la grue, la grue recevant du groupe électrogène sa puissance principale qui prend comme valeur la valeur de fonctionnement, et qui est mis en œuvre si les conditions suivantes sont vérifiées :
- la valeur de fonctionnement de la puissance de fonctionnement pour l'alimentation de la grue est comprise dans la plage de puissance optimale du groupe électrogène ;
- le niveau de charge de la source d'alimentation secondaire est supérieur au premier seuil de charge. Le premier seuil de charge correspond à un seuil de charge en-dessous duquel il est estimé que la source d'alimentation secondaire doit être rechargée, autrement dit si son niveau de charge est en dessous de ce premier seuil de charge alors la source d'alimentation secondaire est insuffisamment chargée. Inversement, lorsque le niveau de charge est au-dessus du premier seuil de charge, la source d'alimentation secondaire est considérée comme étant suffisamment chargée.

Ainsi, avantageusement, le groupe électrogène délivre dans le mode principal une puissance principale qui est constamment comprise dans sa plage de puissance optimale, supprimant tout risque de surconsommation de carburant, d'émission excessive de polluant.

Ce fonctionnement du groupe électrogène dans sa plage de puissance optimale offre également d'autres avantages tels que :
- une consommation optimisée et une réduction de son bilan carbone (une diminution de la consommation de carburant et une émission significativement réduite de dioxyde de carbone et de particules polluantes) ; et
- une meilleure durée de vie et un très faible risque d'endommagement.

Ainsi, le mode principal du procédé automatique de gestion de puissance s'inscrit positivement dans une logique économique et écologique en faveur du développement durable en étant moins énergivore, moins polluant, etc.

Parmi les autres avantages que présentent le procédé automatique de gestion de puissance de l'invention :
- Le groupe électrogène, ainsi que le cas échéant la source d'alimentation secondaire, délivrent à la grue un courant alternatif. Ainsi peuvent être utilisés, pour mettre en œuvre le procédé automatique de gestion de puissance, des groupes électrogènes et des sources d'alimentation secondaires disponibles dans le commerce, ayant des prix modérés, et suffisamment récents pour répondre aux normes et exigences de sécurité et environnementales actuelles ;
- le groupe électrogène et la source d'alimentation secondaire sont prévus pour être facilement remplaçables, rendant possible pour les entreprises liées aux bâtiments et aux travaux public de mettre en œuvre le procédé de gestion de puissance avec des sources d'alimentations peu récentes, puis de les remplacer par la suite par des sources d'alimentations plus en phase avec les enjeux environnementaux d'aujourd'hui dans le cas d'un renouvellement du matériel, pour in fine amorcer ou continuer leur transition écologique.

Comme il le sera expliqué ultérieurement, un autre intérêt de ce procédé automatique est qu'il ne requière pas pour sa mise en œuvre de communication ou de pilotage entre la grue et le groupe électrogène. Autrement dit, ce procédé ne fait pas appel à une logique de commande ou un circuit de commande dans lequel la grue (ou du moins son système de contrôle/commande) gérerait la puissance principale délivrée par le groupe électrogène.

Selon une caractéristique de l'invention, le procédé automatique met en œuvre un autre mode de gestion de puissance, dit mode mixte, dans lequel :
- si la puissance de fonctionnement présente une valeur de fonctionnement non nulle et inférieure à la valeur optimale maximale et si le niveau de charge est inférieur au premier seuil de charge, alors :
- la grue est électriquement connectée au seul groupe électrogène pour recevoir sa puissance de fonctionnement du seul groupe électrogène, ledit groupe électrogène délivrant sa puissance principale qui présente une valeur principale ; et
- la source d'alimentation secondaire est électriquement connectée au groupe électrogène pour recevoir du groupe électrogène la puissance de charge prenant une valeur de charge donnée, afin de recharger ladite source d'alimentation secondaire ; et dans lequel la valeur de charge est ajustée de sorte que la valeur principale, qui correspond à une somme de la valeur de fonctionnement et de la valeur de charge, soit comprise dans la plage de puissance optimale, ledit groupe électrogène fonctionnant alors dans sa plage de puissance optimale.

Autrement dit, dans le cas où le niveau de charge de la source d'alimentation secondaire serait en-dessous du premier seuil de charge, signifiant que la source d'alimentation secondaire est en voie d'être déchargée et a besoin d'être rechargée, et que la valeur de fonctionnement de la puissance de fonctionnement demandée par la grue pour son alimentation ne dépasse pas la valeur optimale maximale de la plage de puissance optimale du groupe électrogène, alors le procédé automatique met en œuvre ce mode de gestion de puissance appelé mode mixte.

Dans ce mode mixte, le groupe électrogène est relié électriquement à la grue et aussi à la source d'alimentation secondaire pour les alimenter toutes deux.

La valeur de charge de la puissance de charge demandée par la source d'alimentation secondaire est ajustée par le procédé automatique de sorte que :
- la somme de la valeur principale et de la valeur secondaire est égale à la valeur de fonctionnement ;
- la valeur principale reste constamment comprise dans la plage optimale de puissance.

Avantageusement, le mode mixe est également pensé pour que le groupe électrogène alimente à la fois la grue et la source d'alimentation secondaire tout en fonctionnant constamment dans sa plage optimale de puissance, pour les mêmes avantages que le mode principal (consommation optimisée, bilan carbone réduit, augmentation de la durée de vie de la source, etc.).

Autrement dit, la variable d'ajustement dans ce mode mixte est la puissance de charge, qui peut être pilotée par la grue (ou par son système de contrôle-commande), afin de maintenir le groupe électrogène dans sa plage optimale de puissance. Il est donc à nouveau clair que ce procédé ne fait pas appel à une commande du système de contrôle/commande de la grue pour gérer la puissance principale délivrée par le groupe électrogène. Le fonctionnement de ce procédé requiert d'ajuster la valeur de charge de la puissance de charge, de sorte que le groupe électrogène délivre uniquement ce que demande la grue et la source d'alimentation secondaire en terme de puissance, et que cette demande reste dans la plage optimale de puissance.

Ainsi, le mode mixte du procédé automatique de gestion de puissance s'inscrit positivement dans une logique économique et écologique en faveur du développement durable.

Selon une caractéristique de l'invention, le procédé automatique met en œuvre un autre mode de gestion de puissance, dit mode hybride, dans lequel :
- si la puissance de fonctionnement présente une valeur de fonctionnement qui est supérieure à la valeur optimale maximale, et si le niveau de charge est supérieur à un second seuil de charge, alors :
- la grue est électriquement connectée à la fois au groupe électrogène et à la source d'alimentation secondaire afin que la grue reçoive :
- la puissance secondaire en provenance de la source d'alimentation secondaire, ladite puissance secondaire prenant une valeur secondaire donnée ; et
- la puissance principale en provenance du groupe électrogène, ladite puissance principale prenant une valeur principale donnée ;
et dans lequel la valeur secondaire est ajustée de sorte que la valeur principale, qui correspond à la différence entre la valeur de fonctionnement et la valeur secondaire, soit comprise dans la plage de puissance optimale, ledit groupe électrogène fonctionnant alors dans sa plage de puissance optimale.

Autrement dit, dans le cas où la valeur de fonctionnement de la puissance de fonctionnement demandée par la grue dépasse la valeur optimale maximale de la plage optimale de puissance du groupe électrogène, le procédé automatique met en œuvre ce mode de gestion de puissance dit mode hybride dans lequel la source d'alimentation secondaire est conformée pour délivrer une valeur secondaire de puissance secondaire :
- égale à la différence entre la valeur de fonctionnement et une valeur principale délivrée par le groupe électrogène, et
- ajustée de sorte que la valeur principale délivrée par le groupe électrogène soit comprise dans la plage optimale de puissance ;
à la condition que son niveau de charge soit supérieur à un second seuil de charge. Ce second seuil de charge est représentatif d'un état de charge de la source d'alimentation secondaire tel qu'elle soit justement en capacité de délivrer ladite valeur secondaire sans risque de présenter un état proche de la décharge ou d'être complètement déchargé. En fonction des caractéristiques de la source d'alimentation secondaire, notamment sa capacité, et de la valeur secondaire qu'elle doit fournir pour compenser à minima la différence entre la valeur de fonctionnement et la valeur optimale maximale (en particulier si ces deux valeurs sont relativement proches), le second seuil de charge peut être sensiblement égal au premier seuil de charge.

Avantageusement, tout comme dans les deux précédents modes de gestion de puissance, le mode hybride est aussi pensé pour que le groupe électrogène fournisse constamment la puissance principale dont la valeur principale est toujours comprise dans la plage optimale de puissance, la source d'alimentation secondaire fournissant quant à elle constamment la différence de puissance d'alimentation à fournir à la grue tant que son état de charge/sa capacité le permet. Là encore, le mode hybride permet de réduire/d'optimiser la consommation du groupe électrogène, de réduire son bilan carbone, et de préserver son état et ainsi augmenter sa durée de vie.

Autrement dit, la variable d'ajustement dans ce mode hybride est la puissance secondaire, qui peut être pilotée par la grue (ou par son système de contrôle-commande), afin de maintenir le groupe électrogène dans sa plage optimale de puissance. Il est donc encore une fois clair que ce procédé ne fait pas appel à une commande du système de contrôle/commande de la grue pour gérer la puissance principale délivrée par le groupe électrogène. Le fonctionnement de ce procédé requiert d'ajuster la valeur secondaire de la puissance secondaire, de sorte que le groupe électrogène délivre uniquement le restant de puissance que demande la grue, et que ce restant de puissance reste dans la plage optimale de puissance.

Ainsi, le mode hybride du procédé automatique de gestion de puissance s'inscrit positivement dans une logique économique et écologique en faveur du développement durable.

Selon une caractéristique de l'invention, le procédé automatique met en œuvre un autre mode de gestion de puissance, dit mode de charge, dans lequel :
- si la puissance de fonctionnement présente une valeur de fonctionnement nulle, et si le niveau de charge est inférieur au seuil de charge maximal, alors
- la source d'alimentation secondaire est électriquement connectée au groupe électrogène pour recevoir du groupe électrogène la puissance de charge prenant une valeur de charge donnée, afin de recharger ladite source d'alimentation secondaire ; et dans lequel la valeur de charge est ajustée de sorte que la valeur principale, qui correspond à la valeur de charge, soit comprise dans la plage de puissance optimale, ledit groupe électrogène fonctionnant alors dans sa plage de puissance optimale.

Autrement dit, le procédé automatique met en œuvre un mode de gestion de puissance dit mode de charge en vue de charger la source d'alimentation secondaire si elle n'est pas complètement chargée lorsque la grue est inactive, c'est-à-dire lorsqu'elle n'est pas en travail. Généralement, la grue est inactive en début et en fin de journée, lorsque le grutier n'est plus présent sur le chantier.

Le mode de charge est défini tel que la valeur de charge/valeur principale de la puissance de charge/puissance principale délivrée par le groupe électrogène reste constamment comprise dans la plage de puissance optimale. Une fois que la source d'alimentation secondaire est chargée, si la grue est toujours inactive, le groupe électrogène, dans la mesure où il n'a plus à délivrer une puissance principale, se met en veille ou s'éteint.

Le mode de charge permet avantageusement lui aussi de réduire/d'optimiser la consommation de carburant du groupe électrogène, d'éviter qu'il émette trop de particules polluantes, et de le conserver en bon état. Il s'inscrit donc positivement dans une logique économique et écologique en faveur du développement durable.

En résumé, avantageusement, le procédé automatique de gestion de puissance pour une alimentation d'une grue s'inscrit positivement dans les enjeux économiques et écologiques du développement durable, en mettant en œuvre dans une variante de réalisation un ensemble de modes (mode principal, mode mixte, mode hybride, mode de charge) tel que pour chacun des modes compris dans cet ensemble, le groupe électrogène fonctionne constamment dans sa plage de puissance optimale, pour une consommation d'énergie optimisée et un bilan carbone moindre.

Selon une caractéristique de l'invention, le procédé automatique comprend au moins :
- une étape de comparaison durant laquelle la valeur de fonctionnement de la puissance de fonctionnement est comparée à la valeur optimale maximale,
- une étape de comparaison durant laquelle le niveau de charge est comparé au premier seuil de charge et/ou au second seuil de charge et/ou au niveau de charge maximal ;
- une étape de sélection du mode de gestion de puissance parmi le mode principal, le mode mixte, le mode hybride et le mode de charge, en fonction des résultats de comparaison des étapes de comparaison précitées.

Le procédé automatique met en œuvre un des quatre modes de gestion de puissance (mode principal, mode mixte, mode hybride, mode de charge) en fonction d'au moins deux comparaisons :
- une première comparaison pour laquelle est comparée la valeur de fonctionnement de puissance de fonctionnement à la valeur optimale maximale, laquelle valeur optimale maximale est prédéterminée ;
- une seconde comparaison pour laquelle est comparé le niveau de charge avec le premier seuil de charge et/ou le second seuil de charge et/ou le niveau de charge maximal, qui sont également prédéfinis.

Ainsi, la sélection du mode de gestion de puissance est indépendante de la puissance principale que délivre le groupe électrogène (à la grue, à la source d'alimentation secondaire, ou au deux) à un instant t. Comme la valeur optimale maximale et les seuils de charge sont des paramètres prédéterminés, le procédé pour être mis en œuvre ne nécessite que la connaissance de la puissance de fonctionnement demandée par la grue et le niveau de charge de la source d'alimentation secondaire.

Avantageusement, cela signifie que le groupe électrogène n'a pas à transmettre d'information au système de contrôle commande de la grue mettant en œuvre le procédé automatique. Il n'a donc pas besoin de communiquer avec lui.

Selon une caractéristique de l'invention, le procédé automatique comprend également une étape de comparaison durant laquelle la valeur de fonctionnement de la puissance de fonctionnement est comparée à la valeur optimale minimale.

Selon une caractéristique de l'invention, dans le mode hybride, la valeur secondaire est ajustée de sorte que la valeur principale soit équivalente à la valeur optimale maximale.

Dans le cas du mode hybride, comme indiqué plus haut, la source d'alimentation secondaire est conformée pour délivrer une valeur secondaire :
- égale à la différence entre la valeur de fonctionnement et une valeur principale délivrée par le groupe électrogène, et
- ajustée de sorte que la valeur principale délivrée soit comprise dans la plage optimale de puissance.

Dans une variante de réalisation de l'invention, la valeur principale peut être égale à la valeur optimale maximale. La valeur secondaire est alors égale à la valeur de fonctionnement moins la valeur optimale maximale. Dans les autres variantes de réalisation, la valeur principale est comprise entre la valeur optimale minimale incluse, et la valeur optimale maximale non incluse.

Selon une caractéristique de l'invention, le rapport de puissance est compris entre 0,6 et 1,2.

Selon un mode de réalisation de l'invention, le rapport de puissance est compris entre 0,6 et 0,8.

Avantageusement, et comme expliqué précédemment, le procédé automatique est conçu de telle sorte que puissent être sélectionnés pour sa mise en œuvre un groupe électrogène légèrement surdimensionné (c'est-à-dire pour lesquels le rapport de puissance entre la puissance principale et la puissance de fonctionnement est supérieur à 1) mais aussi sous-dimensionnés (c'est-à-dire présentant un rapport de puissance inférieure à 1).

Selon une caractéristique de l'invention, la valeur optimale maximale est égale à kmax fois la valeur maximale principale, kmax étant compris entre 0,8 et 0,95.

Selon une caractéristique de l'invention, la valeur optimale minimale est égale à kmin fois la valeur maximale principale, kmin étant non nul et dépendant des propriétés intrinsèques du groupe électrogène.

Selon un mode de réalisation de l'invention, kmin est compris entre 0,4 et 0,8.

Selon une caractéristique de l'invention, le premier seuil de charge est compris entre 50 et 90 % du niveau de charge maximal.

Selon une caractéristique de l'invention, le second seuil de charge est compris entre 20% et 70% du niveau de charge maximal.

Le premier seuil de charge et le second seuil de charge sont fonction des technologies de batterie utilisées. Par exemple, pour des batteries haute performance comme des batteries au lithium, le premier seuil de charge est généralement compris entre 50% et 80% du niveau de charge maximal alors que le second seuil de charge peut être compris entre 20% et 50% du niveau de charge maximal. Pour les batteries au plomb, le premier seuil de charge est plutôt compris entre 70% et 90% du niveau de charge maximal alors que le second seuil de charge est plutôt compris entre 50% et 70% du niveau de charge maximal.

Selon une caractéristique de l'invention, l'un au moins du premier seuil de charge et du second seuil de charge est fixe (autrement dit non variable).

Selon une possibilité, le premier seuil de charge et le second seuil de charge sont fixes.

Selon une variante, l'un au moins du premier seuil de charge et du second seuil de charge varie en fonction d'une température mesurée.

Selon une possibilité, le premier seuil de charge et le second seuil de charge varient en fonction de la température mesurée.

Selon une autre possibilité, le premier seuil de charge diminue lorsque la température mesurée augmente et/ou le second seuil de charge diminue lorsque la température mesurée augmente.

Selon un mode de réalisation de l'invention, la température mesurée est une température de la source d'alimentation secondaire, ou bien une température extérieure.

De manière connue, la température extérieure a une influence sur la vitesse des réactions électrochimiques se produisant au niveau des interfaces électrodes/électrolyte de la batterie, soit sur la capacité des batteries et leur performance/comportement en terme de charge et de décharge. Si la température baisse, le rendement de la réaction sur l'électrode décroît également. En supposant que la tension de la batterie reste constante, le courant de décharge diminue, il en va de même pour la puissance restituable de la batterie. Inversement, si la température augmente, la puissance restituable de la batterie augmente alors. Cependant, si la température est trop élevée, les batteries surchauffent, avec un risque important qu'elles s'endommagent.

Le procédé automatique tient avantageusement compte de l'influence de la température sur le rendement et la capacité de la batterie, en ajustant les valeurs du premier seuil de charge et du second seuil de charge en fonction, selon deux variantes de réalisation de l'invention, de la température de la source d'alimentation secondaire ou bien de la température extérieure, de sorte à ce que l'au moins une batterie constituant la source d'alimentation secondaire voie son nombre de cycle de charge/décharge réduit et ne s'endommage pas si elle est soumise à des températures élevées (au-delà de 45°) ou basses (en dessous de 5°). Ainsi, suivant la température mesurée, le procédé automatique laisse le premier seuil de charge et le second seuil de charge à leur valeur actuelle (il ne les modifie pas), ou bien il augmente ou diminue ces dernières.

Un avantage que présente la mesure de température extérieure est de procéder à une modification des valeurs du premier seuil de charge et du second seuil de charge en cas de températures extérieures élevées ou trop basses sans attendre que la batterie atteigne un état critique pouvant l'endommager. Par exemple, dans le cas d'une température extérieure supérieure à 45°, les valeurs du premier seuil de charge et du second seuil de charge sont diminuées afin de réduire le nombre de cycle de l'au moins une batterie de la source d'alimentation secondaire et la puissance fournie avant que l'au moins une batterie soit en surchauffe.

L'invention concerne également un ensemble de levage de charge comprenant :
- une grue comprenant au moins plusieurs équipements électriques et un système de contrôle-commande en communication avec lesdits plusieurs équipements électriques, ladite grue requérant pour fonctionner et déplacer une charge une puissance de fonctionnement pouvant atteindre une valeur maximale de fonctionnement, la puissance de fonctionnement étant égale à une somme de puissances demandées par les équipements électriques ;
- une source d'alimentation principale comprenant un groupe électrogène muni d'un moteur endothermique apte à fournir à la grue un courant alternatif principal pour une puissance principale pouvant atteindre une valeur maximale principale ; le groupe électrogène étant dimensionné en fonction d'un rapport de puissance tel que la valeur maximale principale est égale à la valeur maximale de fonctionnement multipliée par ledit rapport de puissance qui est inférieur à 1,2, et le groupe électrogène présente une plage de puissance optimale bornée par une valeur optimale minimale et une valeur optimale maximale qui est inférieure à la valeur maximale principale ;
- une source d'alimentation secondaire comprenant au moins une batterie électrique rechargeable, qui présente un niveau de charge compris entre zéro et un niveau de charge maximal, et qui est apte à fournir un courant alternatif secondaire pour délivrer une puissance secondaire et apte à recevoir une puissance de charge pour être rechargée électriquement ;
- un circuit de couplage électrique entre la grue, le groupe électrogène et la source d'alimentation secondaire ;
dans lequel le système de contrôle-commande est en communication avec :
- la source d'alimentation secondaire pour recevoir le niveau de charge et pour ajuster une valeur secondaire de la puissance secondaire et une valeur de charge de la puissance de charge ; et
- le circuit de couplage électrique pour piloter des couplages entre la grue, le groupe électrogène et la source d'alimentation secondaire ;
et dans lequel ledit système de contrôle-commande comprend un programme pour la mise en œuvre du procédé automatique de gestion de puissance conforme à la précédente description.

Comme indiqué, le procédé automatique de gestion de puissance est contenu dans un programme implémenté dans le système de contrôle-commande de la grue. Le système de contrôle-commande a pour rôle de déterminer quel mode de gestion de puissance (mode principal, mode mixte, mode hybride, mode de charge) doit être mis en œuvre en fonction du contexte applicatif. Ce système de contrôle-commande est raccordé à l'ensemble des équipements électriques équipant la grue, comme par exemple les actionneurs propres à déplacer une charge et/ou déplacer un élément de la grue, et les accessoires électriques comme les lumières, alarmes, capteurs, dispositifs de régulation de température, poste de commande, etc.

Avantageusement, selon la conception du procédé automatique, pour déterminer quel mode de gestion de puissance doit être sélectionner, la seule source d'alimentation avec laquelle le système de contrôle-commande ait besoin de communiquer est la source d'alimentation secondaire. Il n'est donc pas nécessaire d'installer un moyen de communication, par exemple un bus de communication, entre le groupe électrogène et la grue pour procéder à de l'échange d'information.

Egalement, le groupe électrogène n'échange pas d'information avec la source d'alimentation secondaire.

Le groupe électrogène ne fait que délivrer de la puissance à la grue et/ou à la source d'alimentation secondaire que lorsqu'il est relié électriquement à elle(s) via le circuit de couplage électrique, et selon la demande de puissance en provenance de celle(s)-ci.

Par conséquent, la mise en œuvre du procédé automatique est donc plus pratique et moins coûteuse, avec moins de moyens hardware, software ou protocolaire à concevoir et/ou à installer.

Une fois le mode de gestion de puissance sélectionné, le système de contrôle-commande communique avec le circuit de couplage électrique pour que celui-ci mette en œuvre électriquement le mode de gestion de puissance sélectionné, comme expliqué ci-après.

Selon une caractéristique de l'invention, le système de contrôle-commande est conformé pour envoyer un ordre de commande au circuit de couplage électrique, lequel est conformé à réception de l'ordre de commande pour relier ou non électriquement la source d'alimentation principale à la source d'alimentation secondaire, la source d'alimentation principale à la grue, et la source d'alimentation secondaire à la grue.

Comme indiqué ci-dessus, la mise en œuvre électrique d'un mode de gestion de puissance est assurée par le circuit de couplage électrique tel que : - dans le mode principal, le circuit de couplage électrique connecte le groupe électrogène à la grue et déconnecte la source d'alimentation secondaire de la grue et du groupe électrogène ;
- dans le mode mixte, il connecte le groupe électrogène à la grue et à la source d'alimentation secondaire, et la source d'alimentation secondaire n'est cependant pas connectée à la grue ;
- dans le mode hybride, il connecte la grue au groupe électrogène et à la source d'alimentation secondaire, et le groupe électrogène et la source d'alimentation secondaire ne sont par contre pas connectées entre elles ;
- dans le mode de charge, le groupe électrogène et à la source d'alimentation sont connectées entre elles et déconnectées toutes les deux de la grue.

Le circuit de couplage électrique met en œuvre électriquement les différents modes de gestion de puissance en fonction d'instructions contenues dans un ordre de commande qu'il reçoit en provenance du système de contrôle-commande.

Selon une caractéristique de l'invention, le système de contrôle-commande est conformé pour envoyer l'ordre de commande en fonction de résultats de comparaison entre au moins la valeur de fonctionnement de la puissance de fonctionnement et la valeur optimale maximale, et aussi en fonction du niveau de charge.

Autrement dit, l'ordre de commande qu'envoie le système de contrôle-commande au circuit de couplage électrique pour qu'il mette en œuvre un mode de gestion de puissance parmi les modes de gestion de puissance disponibles dépend des résultats issus des comparaisons susmentionnées, et est généré suite à celles-ci.

Avantageusement, selon la conception du procédé automatique, le système de contrôle commande n'a pas besoin de connaître la puissance principale que délivre le groupe électrogène pour déterminer quel mode de gestion de puissance doit être mis en œuvre.

Les caractéristiques du groupe électrogène (c'est-à-dire la plage de puissance optimale et donc la valeur optimale maximale) étant des informations connues par les opérateurs lors de son achat, elles peuvent être, dans un mode de réalisation de l'invention, renseignées par ces derniers dans le programme exécutant le procédé automatique.

Egalement, les opérateurs renseignent le premier seuil de charge et le second seuil de charge en fonction du type de source d'alimentation secondaire utilisé, ou du niveau de charge pour lequel ils estiment que cette dernière est déchargée et nécessite d'être chargée.

La valeur de fonctionnement de la puissance de fonctionnement est connue du système de contrôle-commande étant donné qu'il communique avec les équipements électriques de la grue ; elle connaît donc leurs besoins d'alimentation.

C'est pourquoi, en termes de communication externe et d'information, la prise de décision par le système de contrôle-commande de sélectionner un mode de gestion de puissance nécessite uniquement la remontée du niveau de charge de la source d'alimentation secondaire.

Selon une caractéristique de l'invention, en fonction de la température mesurée, le programme mettant œuvre du procédé automatique:
- réceptionne une température mesurée en provenance d'un capteur de température relié au système de contrôle-commande ;
- fait varier l'un au moins du premier seuil de charge et du second seuil de charge en fonction de la température mesurée.

Comme déjà écrit, cette température mesurée peut correspondre soit à la température de la source d'alimentation secondaire, soit à la température extérieure.

Dans le cas où la température mesurée correspond à la température de la source d'alimentation secondaire, le capteur de température peut être intégré à la source d'alimentation secondaire, comme par exemple à sa batterie ou à l'une de ses batteries.

Dans le cas où la température extérieure correspond à la température mesurée, le capteur de température peut par exemple être monté sur la grue.

Selon une caractéristique de l'invention, dans le mode mixte, le système de contrôle-commande est conformé pour envoyer un ordre d'ajustement en mode mixte à la source d'alimentation secondaire afin qu'elle ajuste la valeur de charge de la puissance de charge demandée à la source d'alimentation principale, de sorte que :
- la puissance principale que transmet la source d'alimentation principale à la grue soit égale à la valeur de fonctionnement de puissance de fonctionnement nécessaire pour faire fonctionner les dispositifs électriques de la grue ; et
- que la somme de la valeur de fonctionnement et de la valeur de charge soit comprise dans la plage de puissance optimale afin que la source d'alimentation principale fonctionne dans sa plage de puissance optimale.

Selon une caractéristique de l'invention, dans le mode hybride, le système de contrôle-commande est conformé pour envoyer un ordre d'ajustement en mode hybride à la source d'alimentation secondaire afin qu'elle ajuste la valeur secondaire de la puissance secondaire fournie à la grue de sorte que :
- la valeur secondaire sommée à la valeur principale de puissance principale que délivre la source d'alimentation principale à la grue corresponde à la valeur de fonctionnement de la puissance de fonctionnement demandée par la grue ; et
- que la valeur principale soit comprise dans la plage de puissance optimale afin que la source d'alimentation principale fonctionne dans sa plage de puissance optimale

Selon une caractéristique de l'invention, dans le mode de charge, le système de contrôle-commande est conformé pour envoyer un ordre d'ajustement en mode de charge à la source d'alimentation secondaire afin qu'elle ajuste la valeur de charge de la puissance de charge demandée à la source d'alimentation principale, de sorte que la valeur de charge soit comprise dans la plage de puissance optimale afin que la source d'alimentation principale fonctionne dans sa plage de puissance optimale.

### [Brève description des figures]

D'autres caractéristiques et avantages de la présente invention apparaîtront à la lecture de la description détaillée ci-après, d'un exemple de mise en œuvre non limitatif, faite en référence aux figures annexées dans lesquelles :
[Fig 1] est une illustration du principe de fonctionnement du mode principal ;
[Fig 2] est une illustration du principe de fonctionnement du mode mixte ;
[Fig 3] est une illustration du principe de fonctionnement du mode de charge ;
[Fig 4] est une illustration du principe de fonctionnement du mode hybride ;
[Fig 5] est une illustration du principe de fonctionnement d'un mode secondaire pour lequel seule la source d'alimentation secondaire est raccordée électriquement à la grue pour lui fournir de la puissance, ce mode étant mis en œuvre lorsque la capacité de charge de l'au moins une des batteries la constituant est à son niveau de charge maximal et que la grue demande une puissance de fonctionnement inférieure à la valeur minimale optimale ;
[Fig 6] est un logigramme du procédé automatique de gestion de puissance, montrant notamment comment sont sélectionnés les différents modes de gestion de puissance en fonction de la valeur de fonctionnement de la puissance de fonctionnement requise pour l'alimentation et du niveau de charge de la source d'alimentation secondaire, en fonction respectivement de la plage de puissance optimale et des seuils de charge.

### [Description détaillée d'un ou plusieurs modes de réalisation de l'invention]

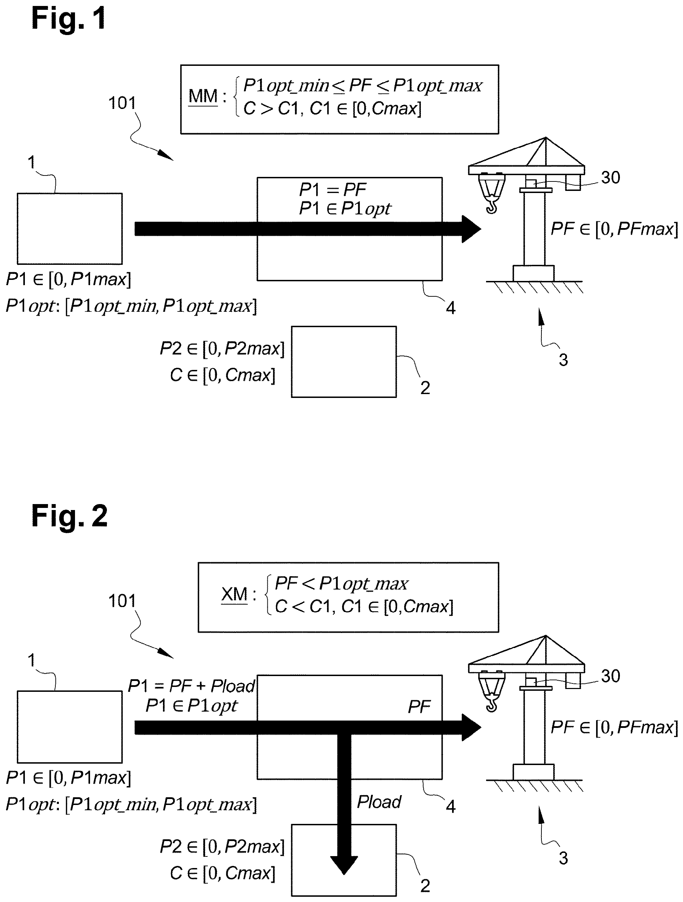

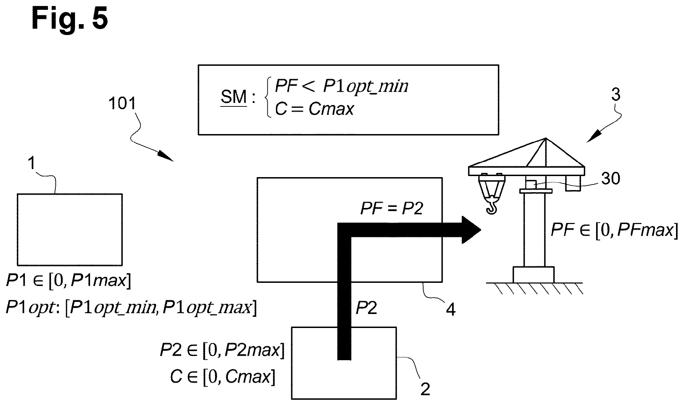

Comme illustré sur les Figures 1 à 5, le procédé automatique 100 de gestion de puissance est mis en œuvre dans le cadre d'un contexte applicatif de l'ensemble 101, pour lequel sont utilisés un groupe électrogène muni d'un moteur endothermique et constituant une source d'alimentation principale 1, et une source d'alimentation secondaire 2 rechargeable comprenant à minima une batterie électrique rechargeable ; cela dans le but de fournir à une grue 3 une puissance de fonctionnement PF nécessaire à son fonctionnement et par exemple nécessaire au déplacement d'une charge comme un levage de charge, ou une rotation de la flèche.

Plus précisément, la puissance de fonctionnement PF sert à alimenter l'ensemble des équipements électriques/électroniques de la grue 3 intervenant dans son fonctionnement. Parmi ces équipements : les actionneurs propres à déplacer une charge et/ou déplacer un élément de la grue (par exemple treuil de levage, treuil de distribution, treuil de relevage de la flèche, moteur d'orientation ; les accessoires comme les lumières ; les alarmes ; les capteurs ; les dispositifs de sécurité ; les dispositifs de régulation de température ; le poste de commande, etc.

La puissance de fonctionnement PF requise est variable et dépend de la nature des tâches de fonctionnement et des système électriques/électroniques intervenant. La valeur de la puissance de fonctionnement PF, ou valeur de fonctionnement, peut atteindre une valeur maximale de fonctionnement PFmax, qui correspond, parmi toutes les actions que peut possiblement réaliser la grue 3, à celle demandant le plus de puissance d'alimentation (c'est-à-dire pour laquelle la somme de puissances d'alimentation des systèmes électriques/électroniques est la plus élevée) qui correspond généralement à une combinaison simultanée de plusieurs tâches « simples », par exemple la mise en œuvre de plusieurs déplacements tels qu'un levage d'une charge pendant que la flèche effectue une rotation.

La source d'alimentation principale 1 sert à délivrer une puissance principale P1 pouvant atteindre une valeur maximale principale P1max. Dans le mode de réalisation présenté, la source d'alimentation principale 1 est un groupe électrogène à moteur endothermique. Aussi, dans la suite de la description, il est considéré, pour plus de praticité, que le groupe électrogène fait référence à la source d'alimentation principale 1 et peut donc porter la même référence numérique « 1 ».

Le groupe électrogène 1 est caractérisé par une plage de puissance optimale P1opt bornée par une valeur optimale minimale P1opt_min non nulle et une valeur optimale maximale P1opt_max inférieure à P1max, dans laquelle il délivre une valeur de puissance principale P1, appelée valeur principale, pour une consommation moindre de carburant et une plus faible émission de dioxyde de carbone et de particules polluantes.

La source d'alimentation secondaire 2 est conformée pour délivrer une puissance secondaire P2 dont la valeur, appelée valeur secondaire, peut atteindre une valeur secondaire maximale P2max. Elle est également caractérisée par un niveau de charge C (c'est-à-dire la capacité de la batterie) pouvant être compris entre 0 et un niveau de charge maximal Cmax (classiquement 100%).

Pour rappel, comme précédemment expliqué, classiquement, en vue d'absorber un pic maximal de puissance de fonctionnement PF, les groupes électrogènes sont surdimensionnés avec une capacité à délivrer une puissance principale P1 pouvant atteindre une valeur maximale principale P1max supérieure à 1,5 fois, voire 3 fois la valeur maximale de fonctionnement PFmax nécessaire à un fonctionnement nominal de la grue 3. Ce surdimensionnement implique généralement que les groupes électrogènes fonctionnent rarement dans leur plage de puissance optimale P1opt.

L'intérêt du procédé automatique 100 de gestion de puissance de l'invention est d'éviter de tels surdimensionnements et de permettre que le groupe électrogène 1 puisse, dans le plus grand nombre de situations possible, fonctionner dans sa plage de puissance optimale P1opt.

La source d'alimentation secondaire 2 est notamment prévue pour à la fois permettre de minimiser le dimensionnement du groupe électrogène 1 mais également, comme déjà mentionné et ré-indiqué plus bas, pour délivrer, si la valeur de fonctionnement de la puissance de fonctionnement PF devait être supérieure à la valeur optimale maximale P1opt_max du groupe électrogène 1, une valeur secondaire égale à la valeur de fonctionnement moins la valeur optimale maximale P1opt_max ; la source d'alimentation principale 1 délivrant à la grue 3 une valeur principale égale à la valeur optimale maximale P1opt_max. Dans une autre variante de réalisation, la source d'alimentation principale 1 peut délivrer une valeur principale légèrement inférieure à la valeur optimale maximale P1opt_max, de sorte à garantir que le groupe électrogène 1 demeure bien dans sa plage de puissance optimale P1opt.

L'invention prévoit plusieurs dimensionnements du groupe électrogène 1 tel que le rapport de puissance de la valeur maximale principale P1max sur la valeur maximale de fonctionnement PFmax est compris entre 0,6 et 1,2. Ainsi, dans une première variante de réalisation de l'invention, le groupe électrogène 1 peut être légèrement surdimensionné, pour un rapport de puissance supérieur à 1 et inférieur à 1,2 ; alors que dans un second mode de réalisation, il peut au contraire être légèrement ou significativement sous-dimensionné, pour un rapport de puissance supérieur ou égal à 0,6 et inférieur ou égal à 1.

Le dimensionnement du groupe électrogène 1 peut, en partie, être dicté, par les performances des références de la ou des batteries à disposition et utilisée(s) comme source d'alimentation secondaire 2.

Un intérêt de l'invention est qu'elle prévoit que le groupe électrogène 1 et la source d'alimentation secondaire 2 délivrent à la grue 3 un courant alternatif. Ainsi, l'invention peut être mise en œuvre au moyen de groupes électrogènes et de batteries « standards », c'est-à-dire disponibles dans le commerce à des prix modérés.

Comme indiqué précédemment, le groupe électrogène 1 et la source d'alimentation secondaires 2 sont prévus pour être facilement remplaçable. Des groupes électrogènes 1 et des sources d'alimentation secondaire 2 anciens qui auraient été utilisés pour mettre auparavant en œuvre le procédé automatique 100 de gestion de puissance peuvent être remplacés/changés par des groupes électrogènes 1 et des sources d'alimentation secondaire 2 plus récents et répondant favorablement aux exigences de sécurité et environnementales actuelles.

La plage de puissance optimale P1opt du groupe électrogène 1 est définie telle que :
- la valeur optimale maximale P1opt_max est égale à kmax fois la valeur maximale principale P1max, avec kmax généralement compris entre 0,8 et 0,95.
- la valeur optimale minimale P1opt_min est égale à kmin fois la valeur maximale principale P1max, la valeur de kmin dépendant des caractéristiques/des performances du groupe électrogène 1 utilisé et pouvant être compris entre 0,4 et 0,8, voire entre 0,6 et 0,7.

Selon les modes de gestion de puissance définissant le procédé automatique 100, et qui seront décrits ultérieurement :
- la grue 3 est alimentée soit par la source d'alimentation principale 1 uniquement, soit par la source d'alimentation principale 1 et la source d'alimentation secondaire 2, soit par la source d'alimentation secondaire 2 uniquement ;
- en cas de décharge, la source d'alimentation secondaires 2 est alimentée par la source d'alimentation principale 1 qui lui fournit une puissance de charge Pload.

A cet effet, l'ensemble 101 comprend un circuit de couplage électrique 4 servant à raccorder électriquement ou non, en fonction du mode de gestion de puissance mis en œuvre par le procédé automatique 100 : la source d'alimentation principale 1 et la source d'alimentation secondaire 2 à la grue 3 ; et la source d'alimentation principale 1 à la source d'alimentation secondaire 2. Ces couplages sont réalisés en fonction d'ordres de commande que le circuit de couplage électrique 4 reçoit en provenance de la grue 3, plus précisément d'un système de contrôle-commande 30 de cette dernière.

Le procédé automatique 100 est contenu et exécuté par un programme implémenté à l'intérieur du système de contrôle-commande 30 de la grue 3. Dans un mode de réalisation, le procédé automatique 100 peut être démarré en début de journée, lorsque le grutier met en route le système de contrôle-commande 30.

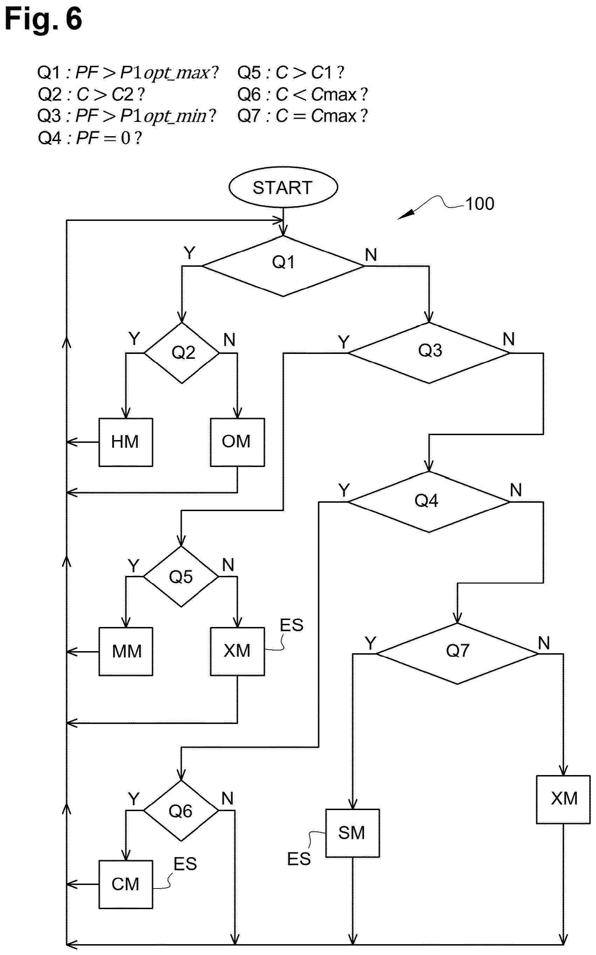

Un logigramme d'un mode de réalisation parmi plusieurs possibles du procédé automatique 100 est illustré Figure 6.

Les modes de gestion de puissances pouvant être mis en œuvre par le procédé automatique 100 sont activés en fonction des résultats de plusieurs comparaisons. Parmi ces comparaisons :
- une comparaison de la valeur maximale de fonctionnement PFmax avec la valeur optimale maximale P1opt_max et éventuellement aussi avec la valeur optimale minimale P1opt_min, notamment pour déterminer si la valeur maximale de fonctionnement PFmax est comprise dans la plage de puissance optimale P1opt ; et
- des comparaisons entre le niveau de charge C de la source d'alimentation secondaire 2 avec un premier seuil de charge C1, un second seuil de charge C2 et le niveau de charge maximal Cmax.

Le premier seuil de charge C1 correspond à un seuil de charge en-dessous duquel il est estimé que la source d'alimentation secondaire 2 doit être rechargée, autrement dit si son niveau de charge C est en dessous de ce premier seuil de charge C1 alors la source d'alimentation secondaire 2 est insuffisamment chargée. Le premier seuil de charge C1 est compris entre 50 % et 90 % du niveau de charge maximal Cmax.

Le second seuil de charge C2 est représentatif d'un état de charge de la source d'alimentation secondaire tel qu'elle soit justement en capacité de délivrer une valeur secondaire de puissance secondaire P2 à la grue 3 sans risque de présenter un état proche de la décharge ou d'être complètement déchargé. Selon différents modes de réalisation de l'invention, en fonction des caractéristiques et performances de la source d'alimentation secondaire 2, le second seuil de charge C2 peut être inférieur au premier seuil de charge C1, ou bien alors être sensiblement égal à ce dernier. Le second seuil de charge C2 est compris entre 20 % et 70 % du niveau de charge maximal Cmax.

La réalisation des différentes comparaisons mises en œuvre par le procédé automatique 100 nécessitent que le programme/le système de contrôle commande 30 connaissent les informations suivantes :
- la valeur de fonctionnement de la puissance de fonctionnement PF demandée par la grue 3 ;
- la valeur optimale minimale P1opt_min et la valeur optimale P1_optmax du groupe électrogène 1 ;
- le niveau de charge C, le premier seuil de charge C1, et le second seuil de charge C2 de la source d'alimentation secondaire 2.

Les caractéristiques du groupe électrogène 1 étant des informations connues par les opérateurs lors de son achat, elles peuvent être, dans un mode de réalisation de l'invention, renseignées par ces derniers dans le programme exécutant le procédé automatique, par exemple lors d'une étape de paramétrage ayant lieu avant l'étape d'exécution même. Les seuils de charge C1 et C2 peuvent quant à eux être définis par l'utilisateur, notamment en prenant en considération les caractéristiques de la batterie.

Enfin, la puissance de fonctionnement PF est connue du système de contrôle-commande 30 étant donné qu'il communique avec les équipements électriques/électroniques de la grue 3 ; connaissant de fait leurs besoins d'alimentation.

Connaissant la puissance de fonctionnement PF et la plage de puissance optimale P1opt du groupe électrogène 1, le système de contrôle-commande 30 n'a pas besoin connaître la puissance principale P1, donc de communiquer avec lui pour l'activation des modes de gestion de puissance et le pilotage du circuit de couplage électrique 4.

En revanche, le système de contrôle-commande doit avoir connaissance du niveau de charge C de la source d'alimentation secondaire 2.

C'est pourquoi il est seulement nécessaire que la source d'alimentation secondaire 2 parmi les deux sources d'alimentation communique avec le système de contrôle-commande 30 de la grue 3, par exemple au moyen d'un bus de communication ou d'un protocole de communication sans fil, afin de lui transmettre le ou les niveau(x) de charge C.

De manière optionnelle, et afin que soit pris en compte l'impact de la température de l'environnement sur les performances de l'au moins une batterie comprise dans la source d'alimentation secondaire 2, le programme exécutant le procédé automatique peut modifier les valeurs du premier seuil de charge C1 et du second seuil de charge C2 en fonction de la température de la source d'alimentation secondaire 2 (dans une première variante de réalisation de l'invention), ou de la température extérieure (dans une seconde variante de réalisation de l'invention), plus précisément en fonction d'une mesure de ladite température de la source d'alimentation secondaire 2 ou de ladite température extérieure qui est transmise au système de contrôle-commande 30.

En fonction de la température de la source d'alimentation secondaire 2 ou de la température extérieure, le programme :
- laisse en l'état / ne modifie pas les valeurs du premier seuil de charge C1 et du second seuil de charge C2, ou
- augmente l'une au moins des deux valeurs, ou
- diminue l'une au moins des deux valeurs.

Dans un mode de réalisation, lors de la définition du premier seuil de charge C1 et du second seuil de charge C2 durant de l'étape de paramétrage, l'opérateur peut renseigner différentes plages températures dans lesquelles le premier seuil de charge C1 et le second seuil de charge C2 prennent une valeur de premier seuil de charge et une valeur de second seuil de charge données. Lors de l'exécution du procédé automatique, lorsqu'une mesure température de la source d'alimentation secondaire 2 ou de la température est transmise au système de contrôle commande 30, le programme détermine à quelle plage de température correspond la température mesurée, et adapte la valeur de premier seuil de charge C1 et la valeur de second seuil de charge C2 en conséquence.

Dans le mode de réalisation où la température mesurée et transmise au système de contrôle-commande 30 correspond à la température de la source d'alimentation secondaire 2, la température de la source d'alimentation secondaire 2 est soit :
- si la technologie de l'au moins une batterie comprise dans la source d'alimentation secondaire 2 le permet, transmise par la source d'alimentation secondaire 2 elle-même (en même temps que le niveau de charge),
- mesurée puis transmise par un dispositif de mesure de température externe en communication à la fois avec la source d'alimentation secondaire 2 et le système de contrôle-commande 30.

Dans le mode de réalisation où la température mesurée correspond à la température extérieure, la mesure extérieure est soit :
- mesurée puis transmise par un dispositif de mesure de température externe en communication avec le système de contrôle-commande 30 de la grue 3,
- soit un équipement intégré à la grue 3 en communication avec le système de contrôle-commande 30, par exemple un capteur de mesure de température.

Dans un mode de réalisation, l'arrêt du procédé automatique 100 peut se produire en fin de journée, avec le grutier éteignant le système de contrôle-commande 30 (à noter que l'étape d'arrêt « STOP » du procédé automatique n'est pas représenté sur la Figure 6). Dans un second mode de réalisation, il est envisageable que l'arrêt du procédé automatique 100 s'effectue automatiquement si la grue 3 est mise au repos (et donc sa puissance de fonctionnement est nulle), et si le niveau de charge C la source d'alimentation secondaire 2 est à son niveau de charge maximal Cmax après une recharge automatisée de la batterie.

Entre son démarrage et son arrêt, le procédé automatique 100 est exécuté en continu, et commute d'un mode de gestion de puissance à un autre mode de gestion de puissance parmi les plusieurs modes de gestion de puissance qu'il comprend en fonction des résultats de comparaison des étapes de comparaison.

L'ordre dans lequel sont réalisées ces étapes de comparaison n'a pas d'importance puisque que seul leur résultat compte. Dans le mode de réalisation illustré Figure 6, la sélection des modes de gestion de puissance lors d'étapes de sélection ES repose d'abord sur des comparaisons de puissance (notamment pour déterminer sur la puissance de fonctionnement PF est comprise dans la plage de puissance optimale P1opt) puis sur des comparaisons entre le niveau de charge C et les seuils de charge C1, C2. Dans un autre mode de réalisation, il est envisageable que les comparaisons entre le niveau de charge C et les seuils de charge C1, C2 pourraient être réalisées avant les comparaisons de puissance.

Dans la suite de la description sont maintenant présentés les modes de gestion de puissance mis en œuvre dans l'invention et leurs conditions d'activation.

En référence à la Figure 6, lors d'une étape de comparaison Q1, le procédé automatique 100 détermine si la valeur de fonctionnement de la puissance de fonctionnement PF est supérieure à la valeur optimale maximale P1opt_max. Si ce n'est pas le cas, il compare ensuite la valeur de fonctionnement lors d'une étape de comparaison Q3 avec la valeur optimale minimale P1opt_min, dans le but de déterminer si elle incluse dans la plage de puissance optimale P1opt.

Si la valeur de fonctionnement est comprise dans la plage de puissance optimale P1opt, alors le procédé automatique 100 compare le niveau de charge C de la source d'alimentation secondaire 2 au premier seuil de charge C1 lors d'une étape de comparaison Q5. Si le niveau de charge C est supérieur au premier seuil de charge C1, alors est sélectionné un premier mode de gestion de puissance appelé mode principal MM. Si non, c'est un second mode de gestion de puissance appelé mode mixte XM qui est sélectionné.

Dans le mode principal MM, illustré Figure 1, le circuit de couplage électrique 4 raccorde électriquement uniquement le groupe électrogène 1 à la grue 3, avec le groupe électrogène 1 délivrant une puissance principale P1 qui est constamment comprise dans la plage de puissance optimale P1opt (car la puissance de fonctionnement PF est comprise dans cette plage de puissance optimale P1opt), supprimant tout risque de surconsommation de carburant, d'émission excessive de polluant, et d'endommagement du groupe électrogène 1. Dans ce mode principal MM, la source d'alimentation secondaire 2 a son niveau de charge C supérieur au premier seuil de charge C1, et elle n'a donc pas besoin d'être rechargée, et donc elle n'est pas connectée au groupe électrogène 1.

Dans le mode mixte XM, illustré Figure 2, le circuit de couplage électrique 4 raccorde électriquement le groupe électrogène 1 à la fois à la source d'alimentation secondaire 2 et à la grue 3. Etant en communication avec la source d'alimentation secondaire 2, la grue 3 est conformée pour la piloter en lui envoyant un ordre d'ajustement. L'ordre d'ajustement consiste à ce que la source d'alimentation secondaire 2 ajuste la puissance de charge Pload qu'elle demande et reçoit du groupe électrogène 1, de sorte que la puissance principale P1 qu'il délivre, et qui est égale à la somme de la puissance fonctionnement PF et de la puissance de charge Pload, soit incluse dans la plage de puissance optimale P1opt. Dans ce mode mixte XM, la source d'alimentation secondaire 2 a son niveau de charge C inférieur au premier seuil de charge C1, et elle a donc besoin d'être rechargée, et donc elle est connectée au groupe électrogène 1 pour recevoir la puissance de charge Pload ajustée.

Dans le cas par exemple où la puissance de fonctionnement PF demandée par la grue 3 reste comprise dans la plage de puissance optimale P1opt, et que le niveau de charge C de la source d'alimentation secondaire 2 redevient supérieur au premier seuil de charge C1, le procédé automatique 100 bascule du mode mixte XM au mode principal MM.

Si à la fin de l'étape de comparaison Q3, il est déterminé que la puissance de fonctionnement PF est inférieure à la valeur optimale minimale P1opt_min, une nouvelle étape de comparaison Q4 est mise en œuvre pour déterminer si la puissance de fonctionnement PF est égale à zéro ou non.

Si à l'étape Q4 la puissance de fonctionnement PF est non nulle (et donc est comprise entre 0 et la valeur optimale minimale P1opt_min), le procédé automatique 100 détermine alors durant une étape de comparaison Q7 si le niveau de charge C de la source d'alimentation secondaire 2 est à son niveau de charge maximal Cmax.

Si le niveau de charge C est inférieur au niveau de charge maximal Cmax, le procédé automatique 100 met en œuvre le mode mixte XM décrit ci-dessus.

Dans le cas contraire, si le niveau de charge C est égal au niveau de charge maximal Cmax (autrement dit si la source d'alimentation secondaire 2 est complètement chargée), le procédé automatique 100 met en œuvre un mode secondaire SM durant lequel seule la source d'alimentation secondaire 2 est raccordée électriquement à la grue 3, et fournit à celle-ci une puissance secondaire P2 correspondant à la puissance de fonctionnement PF demandée. Dans ce mode secondaire SM, la source d'alimentation principale 1 n'est raccordée ni à la grue 3 ni à la source d'alimentation secondaire 2, et peut donc être mise en veille. Selon une option, ce mode secondaire SM peut être mise en œuvre tant que le niveau de charge C est supérieur au premier seuil de charge C1, et bien sûr tant qu'aussi la puissance de fonctionnement PF est non nulle et inférieure à la valeur optimale minimale P1opt_min.Si à l'étape Q4 la puissance de fonctionnement PF est nulle, signifiant que la grue 3 n'est pas en demande de puissance, le procédé automatique 100 vérifie lors d'une étape de comparaison Q6 si la source d'alimentation secondaire 2 est complètement chargée ou non (donc si le niveau de charge C est égale au niveau de charge maximal Cmax).

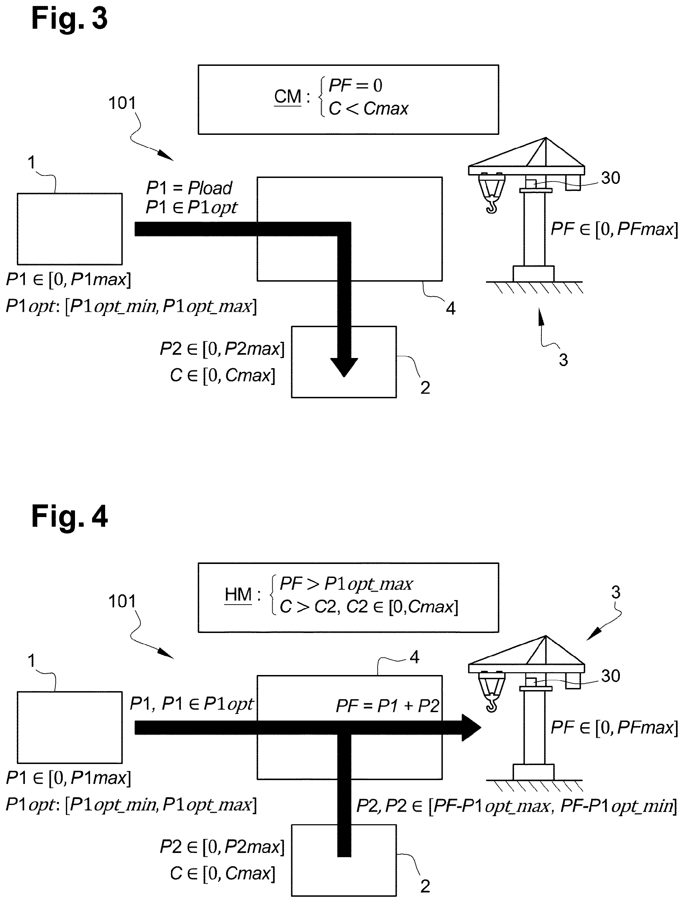

Si à l'étape Q6 le niveau de charge C est inférieur au niveau de charge maximal Cmax (autrement dit la source d'alimentation secondaire 2 n'est pas complètement chargée), le procédé automatique 100 met en œuvre un mode de charge CM, illustré Figure 3, dans lequel le circuit de couplage électrique 4 raccorde électriquement le groupe électrogène 1 à la source d'alimentation secondaire 2 en vue qu'il fournisse une puissance principale P1 correspondant à une puissance de charge Pload pour recharger la source d'alimentation secondaire 2. La grue 3 ne reçoit aucune puissance en provenance des deux sources d'alimentation 1, 2. Dans ce mode de charge CM, le système de contrôle-commande 30 de la grue 3 est également conformé pour piloter la source d'alimentation secondaire 2 en lui envoyant un ordre d'ajustement pour qu'elle ajuste la puissance de charge Pload qu'elle demande au groupe électrogène 1, de sorte qu'elle soit comprise dans la plage de puissance optimale P1opt. De cette manière, la puissance principale P1 est comprise dans la plage de puissance optimale P1opt.

Si à l'étape Q6 le niveau de charge C est égal au niveau de charge maximal Cmax (autrement dit la source d'alimentation secondaire 2 est complètement chargée), le groupe électrogène 1, dans la mesure où il n'a pas à délivrer de puissance principale P1 se met en veille ou s'éteint en attendant que le procédé automatique 100 mette en œuvre un autre mode de gestion de puissance. Si la grue 3 reste très longtemps inactive, le niveau de charge C de l'au moins une batterie peut éventuellement diminuer. Dans ce cas, s'il est actif, le procédé automatique 100 met alors en œuvre de la mode de charge CM.

Suite à l'étape de comparaison Q1, dans le cas où la puissance de fonctionnement PF est supérieure à la valeur optimale maximale P1opt_max, le procédé automatique 100 procède à une étape de comparaison Q2 durant laquelle il est vérifié si le niveau de charge C de la source d'alimentation secondaire 2 est supérieur ou non au second seuil de charge C2. Il est à noter que ce cas de figure où la puissance de fonctionnement PF demandée par la grue 3 est supérieure à la valeur optimale maximale P1opt_max, correspond à un cas de pic de puissance associé à un pic d'activité de la grue 3 avec un grand nombre d'équipements électriques sollicitant une alimentation et pouvant atteindre PFmax.

Si à l'étape Q2 le niveau de charge C est supérieur au second seuil de charge C2, le procédé automatique 100 met en œuvre un mode de gestion de puissance appelé mode hybride HM, illustré Figure 4, dans lequel le circuit de couplage électrique 4 relie électriquement le groupe électrogène 1 et la source d'alimentation secondaire P2 à la grue 3 pour qu'il lui délivre respectivement une puissance principale P1 et une puissance secondaire P2. Dans ce mode hybride HM, le système de contrôle-commande 30 est conformé pour envoyer à la source d'alimentation secondaire 2 un ordre d'ajustement de sorte que le puissance secondaire P2 qu'elle envoie à la grue 3 soit à minima égale à la différence entre la puissance de fonction PF et la valeur optimale maximale P1opt_max, et à maxima égale à la différence entre la puissance de fonction PF et la valeur optimale maximale P1opt_min ; le groupe électrogène 1 délivrant alors une puissance principale P1 toujours comprise dans la plage de puissance optimale P1opt.

Si à l'étape Q2 le niveau de charge C est inférieur au second seuil de charge C2, le procédé automatique 100 met en œuvre un mode de gestion de puissance appelé mode critique OM, dans lequel le circuit de couplage électrique 4 relie électriquement le groupe électrogène 1 à la grue 3 pour qu'il lui délivre une puissance principale P1, telle que la puissance principale P1 est supérieure à la valeur optimale maximale P1opt_max ; autrement dit le groupe électrogène 1 est hors de sa plage optimale Popt. Dans ce mode critique OM la puissance principale P1 peut même être égale à la valeur maximale principale P1max.

Dans ce mode critique OM, le circuit de couplage électrique 4 peut aussi relier électriquement la source d'alimentation secondaire 2 à la grue 3 (selon comment a été fixé le second seuil de charge C2) pour que la source d'alimentation secondaire 2 puisse fournir pendant un laps de temps donné (jusqu'à son déchargement complet) une puissance secondaire P2 permettant de compléter si besoin la puissance principale P1 fournie par le groupe électrogène 1 afin d'atteindre ensemble la puissance de fonctionnement PF dans le cas de figure exceptionnel où la puissance de fonctionnement PF est supérieure à la valeur maximale principale P1max.

Dans une autre variante de réalisation de l'invention, lors du mode critique OM, le système de contrôle-commande 30 est configuré pour déterminer à quelle vitesse se décharge la source d'alimentation secondaire 2 lorsqu'elle doit fournir la puissance secondaire P2, une décharge excessive présentant un fort risque de décharger complètement la source d'alimentation secondaire 2. Dans le cas où cette éventualité se produit :
- la source d'alimentation secondaire 2 ne fournit plus de puissance secondaire P2 à la grue 3,
- certaines actions de la grue 3 trop consommatrices en puissance sont interrompues, comme les opérations de levage,
- le groupe électrogène 1 fournit une puissance principale P1 à la grue 3 en vue qu'elle continue de réaliser des actions moins coûteuses en énergie, ainsi qu'à la source d'alimentation secondaire 2 pour la recharger jusqu'à ce que celle-ci atteigne à minima le second seuil de charge C2. Cette configuration est différente du mode mixte XM car le groupe électrogène 1 peut fonctionner ou non dans sa plage de puissance optimale P1opt (autrement dit, cette configuration peut être considérée comme un mode dégradé du mode mixte XM).

Avantageusement, le procédé automatique 100 met en œuvre plusieurs modes de gestion de puissance (mode principal, mode mixte, mode hybride, mode de charge) tel que pour chacun d'entre eux, le groupe électrogène 1 fonctionne constamment dans sa plage de puissance optimale Popt ; sauf dans le cas exceptionnel du mode critique OM. Dans le mode secondaire SM, le groupe électrogène 1 est mis en veille.

Il est à noter que la probabilité d'occurrence du mode critique OM reste très faible. Son occurrence suppose de très fréquents pics intenses d'activité de la grue 3 sur une longue durée sans qu'il y ait de possibilité de recharger la source d'alimentation secondaire 2. Par ailleurs, le groupe électrogène 1 et la source d'alimentation secondaire 2 sont choisis de sorte à être en adéquation avec les besoins en puissance de la grue 3, devant donc éviter que ce mode critique OM ne se produise.

Etant donné que le système de contrôle-commande 30 gère indirectement la puissance principale P1 que délivre le groupe électrogène 1 dans le mode mixte XM, le mode hybride HM, et le mode de charge CM à partir d'un pilotage de la source d'alimentation secondaire 2 pour qu'il reste dans sa plage de puissance optimale P1opt (le groupe électrogène 1 étant quoiqu'il arrive dans cette plage de puissance optimale P1opt dans le mode principal MM), l'invention présente comme avantage de ne pas nécessiter la conception et/ou l'installation d'un moyen de communication entre le groupe électrogène 1 et la grue 3 pour procéder à de l'échange d'information ou de commande.

Egalement, le groupe électrogène 1 n'échange pas d'information avec la source d'alimentation secondaire 2 vu qu'il se contente de délivrer une puissance de charge Pload uniquement que lorsqu'il est relié électriquement à elle, dans le mode mixte XM et le mode de charge CM, et selon la demande en puissance en provenance de celle-ci.

Par conséquent, la mise en œuvre du procédé automatique est donc plus pratique et moins coûteuse, avec moins de moyens hardware, software ou protocolaire à concevoir et/ou à installer.

## Revendications

1. Procédé automatique (100) de gestion de puissance pour l'alimentation d'une grue (3) requérant pour fonctionner et déplacer une charge une puissance de fonctionnement (PF) pouvant atteindre une valeur maximale de fonctionnement (PFmax), lequel procédé automatique (100) fait intervenir :
- une source d'alimentation principale (1) comprenant un groupe électrogène muni d'un moteur endothermique apte à fournir à la grue un courant alternatif principal pour une puissance principale (P1) pouvant atteindre une valeur maximale principale (P1max) ; le groupe électrogène présentant une plage de puissance optimale (P1opt) bornée par une valeur optimale minimale (P1opt_min) et une valeur optimale maximale (P1opt_max) qui est inférieure à la valeur maximale principale (P1max) ;
- une source d'alimentation secondaire (2) comprenant au moins une batterie électrique rechargeable, qui présente un niveau de charge (C) compris entre zéro et un niveau de charge maximal (Cmax), et qui est apte à fournir un courant alternatif secondaire pour délivrer une puissance secondaire (P2) et apte à recevoir une puissance de charge (Pload) pour être rechargée électriquement ;
et lequel procédé automatique (100) met en œuvre un mode de gestion de puissance, dit mode principal (MM), dans lequel la grue (3) est électriquement connectée au seul groupe électrogène afin qu'elle reçoive du groupe électrogène la puissance principale (P1) ;
le procédé automatique (100) de gestion de puissance étant **caractérisé en ce que** le groupe électrogène est dimensionné en fonction d'un rapport de puissance tel que la valeur maximale principale (P1max) est égale à la valeur maximale de fonctionnement (PFmax) multipliée par ledit rapport de puissance qui est inférieur à 1,2, et
**en ce que**, dans le mode principal (MM), si la puissance de fonctionnement (PF) présente une valeur de fonctionnement comprise dans la plage de puissance optimale (P1opt) du groupe électrogène, et si le niveau de charge (C) est supérieur à un premier seuil de charge (C1), alors la grue (3) reçoit du groupe électrogène la puissance principale (P1) qui est égale à la valeur de fonctionnement, ledit groupe électrogène fonctionnant alors dans sa plage de puissance optimale (P1opt).

2. Procédé automatique (100) selon la revendication 1, dans lequel le procédé automatique met en œuvre un autre mode de gestion de puissance, dit mode mixte (XM), dans lequel :
- si la puissance de fonctionnement (PF) présente une valeur de fonctionnement non nulle et inférieure à la valeur optimale maximale (P1opt_max) et si le niveau de charge (CL) est inférieur au premier seuil de charge (C1), alors :
- la grue (3) est électriquement connectée au seul groupe électrogène pour recevoir sa puissance de fonctionnement (PF) du seul groupe électrogène, ledit groupe électrogène délivrant sa puissance principale (P1) qui présente une valeur principale ; et
- la source d'alimentation secondaire (2) est électriquement connectée au groupe électrogène pour recevoir du groupe électrogène la puissance de charge (Pload) prenant une valeur de charge donnée, afin de recharger ladite source d'alimentation secondaire (2) ;
et dans lequel la valeur de charge est ajustée de sorte que la valeur principale, qui correspond à une somme de la valeur de fonctionnement et de la valeur de charge, soit comprise dans la plage de puissance optimale (P1opt), ledit groupe électrogène fonctionnant alors dans sa plage de puissance optimale (P1opt).

3. Procédé automatique (100) selon l'une quelconque des revendications précédentes, dans lequel le procédé automatique met en œuvre un autre mode de gestion de puissance, dit mode hybride (HM), dans lequel :
- si la puissance de fonctionnement (PF) présente une valeur de fonctionnement qui est supérieure à la valeur optimale maximale (P1opt_max), et si le niveau de charge (C) est supérieur à un second seuil de charge (C2), alors :
- la grue (3) est électriquement connectée à la fois au groupe électrogène et à la source d'alimentation secondaire (2) afin que la grue (3) reçoive :
- la puissance secondaire (P2) en provenance de la source d'alimentation secondaire (2), ladite puissance secondaire (P2) prenant une valeur secondaire donnée ; et
- la puissance principale (P1) en provenance du groupe électrogène, ladite puissance principale (P1) prenant une valeur principale donnée ;
et dans lequel la valeur secondaire est ajustée de sorte que la valeur principale, qui correspond à la différence entre la valeur de fonctionnement et la valeur secondaire, soit comprise dans la plage de puissance optimale (P1opt), ledit groupe électrogène fonctionnant alors dans sa plage de puissance optimale (P1opt).

4. Procédé automatique (100) selon l'une quelconque des revendications précédentes, dans lequel le procédé automatique met en œuvre un autre mode de gestion de puissance, dit mode de charge (CM), dans lequel :
- si la puissance de fonctionnement (PF) présente une valeur de fonctionnement nulle, et si le niveau de charge (C) est inférieur au seuil de charge maximal (Cmax), alors :
- la source d'alimentation secondaire (2) est électriquement connectée au groupe électrogène pour recevoir du groupe électrogène la puissance de charge (Pload) prenant une valeur de charge donnée, afin de recharger ladite source d'alimentation secondaire (2) ;
et dans lequel la valeur de charge est ajustée de sorte que la valeur principale, qui correspond à la valeur de charge, soit comprise dans la plage de puissance optimale (P1opt), ledit groupe électrogène fonctionnant alors dans sa plage de puissance optimale (P1opt).

5. Procédé automatique (100) selon les revendications 1 à 4, dans lequel le procédé automatique (100) comprend au moins :
- une étape de comparaison (Q1) durant laquelle la valeur de fonctionnement de la puissance de fonctionnement (PF) est comparée à la valeur optimale maximale (P1opt_max),
- une étape de comparaison (Q2 ; Q5 ; Q6) durant laquelle le niveau de charge (C) est comparé au premier seuil de charge (C1) et/ou au second seuil de charge (C2) et/ou au niveau de charge maximal (Cmax) ;
- une étape de sélection (ES) du mode de gestion de puissance parmi le mode principal (MM), le mode mixte (XM), le mode hybride (HM) et le mode de charge (CM), en fonction des résultats de comparaison des étapes de comparaisons (Q1; Q2 ; Q5 ; Q6).

6. Procédé automatique (100) selon la revendication 5, dans lequel le procédé automatique (100) comprend également une étape de comparaison (Q3) durant laquelle la valeur de fonctionnement de la puissance de fonctionnement (PF) est comparée à la valeur optimale minimale (P1opt_min).

7. Procédé automatique (100) selon la revendication 3, dans lequel, dans le mode hybride (HM), la valeur secondaire est ajustée de sorte que la valeur principale soit équivalente à la valeur optimale maximale (P1opt_max).

8. Procédé automatique (100) selon l'une quelconque des revendications précédentes, dans lequel le rapport de puissance est compris entre 0,6 et 1,2.

9. Procédé automatique (100) selon l'une quelconque des revendications précédentes, dans lequel la valeur optimale maximale (P1opt_max) est égale à kmax fois la valeur maximale principale (P1max), kmax étant compris entre 0,8 et 0,95.

10. Procédé automatique (100) selon l'une quelconque des revendications précédentes, dans lequel la valeur optimale minimale (P1opt_min) est égale à kmin fois la valeur maximale principale (P1max), kmin étant non nul et dépendant de propriétés intrinsèques du groupe électrogène.

11. Procédé automatique (100) selon l'une quelconque des revendications précédentes, dans lequel le premier seuil de charge (C1) est compris entre 50 et 90 % du niveau de charge maximal (Cmax).

12. Procédé automatique (100) selon l'une quelconque des revendications précédentes, dans lequel le second seuil de charge (C2) est compris entre 20% et 70 % du niveau de charge maximal (Cmax).

13. Ensemble (101) de levage de charge comprenant :
- une grue (3) comprenant au moins plusieurs équipements électriques et un système de contrôle-commande (30) en communication avec lesdits plusieurs équipements électriques, ladite grue (3) requérant pour fonctionner et déplacer une charge une puissance de fonctionnement (PF) pouvant atteindre une valeur maximale de fonctionnement (PFmax), la puissance de fonctionnement (PF) étant égale à une somme de puissances demandées par les équipements électriques ;
- une source d'alimentation principale (1) comprenant un groupe électrogène muni d'un moteur endothermique apte à fournir à la grue (3) un courant alternatif principal pour une puissance principale (P1) pouvant atteindre une valeur maximale principale (P1max) ; le groupe électrogène présentant une plage de puissance optimale (P1opt) bornée par une valeur optimale minimale (P1opt_min) et une valeur optimale maximale (P1opt_max) qui est inférieure à la valeur maximale principale (P1max) ;
- une source d'alimentation secondaire (2) comprenant au moins une batterie électrique rechargeable, qui présente un niveau de charge (C) compris entre zéro et un niveau de charge maximal (Cmax), et qui est apte à fournir un courant alternatif secondaire pour délivrer une puissance secondaire (P2) et apte à recevoir une puissance de charge (Pload) pour être rechargée électriquement ;
- un circuit de couplage électrique (4) entre la grue (3), le groupe électrogène et la source d'alimentation secondaire (2) ;
dans lequel le système de contrôle-commande (30) est en communication avec :
- la source d'alimentation secondaire (2) pour recevoir le niveau de charge (C) et pour ajuster une valeur secondaire de la puissance secondaire (P2) et une valeur de charge de la puissance de charge (Pload) ; et
- le circuit de couplage électrique (4) pour piloter des couplages entre la grue (3), le groupe électrogène et la source d'alimentation secondaire (2) ;
l'ensemble (101) de levage de charge étant **caractérisé en ce que** le groupe électrogène est dimensionné en fonction d'un rapport de puissance tel que la valeur maximale principale (P1max) est égale à la valeur maximale de fonctionnement (PFmax) multipliée par ledit rapport de puissance qui est inférieur à 1,2, et
**en ce que** le système de contrôle-commande (30) comprend un programme pour la mise en œuvre du procédé automatique (100) de gestion de puissance conforme à l'une quelconque des revendications précédentes.

14. Ensemble (101) selon la revendication 13, dans lequel le système de contrôle-commande (30) est conformé pour envoyer un ordre de commande au circuit de couplage électrique (4), lequel est conformé à réception de l'ordre de commande pour relier ou non électriquement la source d'alimentation principale (1) à la source d'alimentation secondaire (2), la source d'alimentation principale (1) à la grue (3), et la source d'alimentation secondaire (2) à la grue (3).

15. Ensemble (101) selon la revendication 14, dans lequel le système de contrôle-commande (30) est conformé pour envoyer l'ordre de commande en fonction de résultats de comparaison entre au moins la valeur de fonctionnement de la puissance de fonctionnement (PF) et la valeur optimale maximale (P1opt_max), et aussi en fonction du niveau de charge (C).

## Patentansprüche

1. Automatisches Verfahren (100) zur Leistungsverwaltung für die Stromversorgung eines Krans (3), der zum Betrieb und zum Bewegen einer Last eine Betriebsleistung (PF) erfordert, die einen maximalen Betriebswert (PFmax) erreichen kann, wobei das automatische Verfahren (100) Folgendes einsetzt:
- eine Hauptstromversorgungsquelle (1), die einen Generator mit einem endothermen Motor umfasst, der in der Lage ist, dem Kran einen Hauptwechselstrom für eine Hauptleistung (P1) zu liefern, die einen maximalen Hauptwert (P1max) erreichen kann; wobei der Generator einen optimalen Leistungsbereich (P1opt) aufweist, der durch einen minimalen optimalen Wert (P1opt_min) und einen maximalen optimalen Wert (P1opt_max), welcher kleiner als der maximale Hauptwert (P1max) ist, begrenzt ist;
- eine sekundäre Stromversorgungsquelle (2), die mindestens eine wiederaufladbare elektrische Batterie umfasst, die einen Ladezustand (C) zwischen Null und einem maximalen Ladezustand (Cmax) aufweist und die in der Lage ist, einen sekundären Wechselstrom zum Bereitstellen einer sekundären Leistung (P2) zu liefern, und in der Lage ist, eine Ladeleistung (Pload) zum elektrischen Wiederaufladen zu erhalten;
und wobei das automatische Verfahren (100) einen Leistungsverwaltungsmodus, den sogenannten Hauptmodus (MM), umsetzt, wobei der Kran (3) elektrisch mit dem einzigen Generator verbunden ist, damit er von dem Generator die Hauptleistung (P1) erhält;
wobei das automatische Verfahren (100) zur Leistungsverwaltung **dadurch gekennzeichnet ist, dass** der Generator in Abhängigkeit von einem Leistungsverhältnis so dimensioniert ist, dass der maximale Hauptwert (P1max) gleich dem maximalen Betriebswert (PFmax) multipliziert mit dem Leistungsverhältnis ist, das kleiner als 1,2 ist, und
dass im Hauptmodus (MM), wenn die Betriebsleistung (PF) einen Betriebswert aufweist, der im optimalen Leistungsbereich (Plopt) des Generators liegt, und wenn der Lastzustand (C) größer als ein erster Lastschwellenwert (C1) ist, dann der Kran (3) vom Generator die Hauptleistung (P1) erhält, die gleich dem Betriebswert ist, wobei der Generator dann in seinem optimalen Leistungsbereich (P1opt) arbeitet.

2. Automatisches Verfahren (100) nach Anspruch 1, wobei das automatische Verfahren einen anderen Leistungsverwaltungsmodus, den sogenannten Mischmodus (XM), umsetzt, wobei:
- wenn die Betriebsleistung (PF) einen Betriebswert aufweist, der nicht Null und kleiner als der maximale optimale Wert (P1opt_max) ist, und wenn der Ladezustand (CL) kleiner als der erste Ladeschwellenwert (C1) ist, dann:
- ist der Kran (3) elektrisch mit dem einzigen Generator verbunden, um seine Betriebsleistung (PF) vom einzigen Generator zu erhalten, wobei der Generator seine Hauptleistung (P1) bereitstellt, die einen Hauptwert aufweist; und
- ist die sekundäre Stromversorgungsquelle (2) elektrisch mit dem Generator verbunden, um von dem Generator die Ladeleistung (Pload) zu erhalten, die einen bestimmten Lastwert annimmt, um die sekundäre Stromversorgungsquelle (2) wieder aufzuladen;
und wobei der Lastwert so angepasst wird, dass der Hauptwert, der einer Summe aus dem Betriebswert und dem Lastwert entspricht, im optimalen Leistungsbereich (P1opt) liegt, wobei der Generator dann in seinem optimalen Leistungsbereich (P1opt) arbeitet.

3. Automatisches Verfahren (100) nach einem der vorhergehenden Ansprüche, wobei das automatische Verfahren einen anderen Leistungsverwaltungsmodus, den sogenannten Hybridmodus (HM), umsetzt, wobei:
- wenn die Betriebsleistung (PF) einen Betriebswert aufweist, der größer als der maximale optimale Wert (P1opt_max) ist, und wenn der Ladezustand (C) größer als ein zweiter Ladeschwellenwert (C2) ist, dann:
- ist der Kran (3) sowohl mit dem Generator als auch mit der sekundären Stromversorgung (2) elektrisch verbunden, sodass der Kran (3) Folgendes erhält:
- die sekundäre Leistung (P2) von der sekundären Stromversorgungsquelle (2), wobei die sekundäre Leistung (P2) einen bestimmten sekundären Wert annimmt; und
- die Hauptleistung (P1) von dem Generator, wobei die Hauptleistung (P1) einen bestimmten Hauptwert annimmt;
und wobei der sekundäre Wert so angepasst wird, dass der Hauptwert, der der Differenz zwischen dem Betriebswert und dem sekundären Wert entspricht, im optimalen Leistungsbereich (P1opt) liegt, wobei der Generator dann in seinem optimalen Leistungsbereich (P1opt) arbeitet.

4. Automatisches Verfahren (100) nach einem der vorhergehenden Ansprüche, wobei das automatische Verfahren einen anderen Leistungsverwaltungsmodus, den sogenannten Lademodus (CM), umsetzt, wobei:
- wenn die Betriebsleistung (PF) einen Betriebswert von Null aufweist und wenn der Ladezustand (C) kleiner als der maximale Ladeschwellenwert (Cmax) ist, dann:
- ist die sekundäre Stromversorgungsquelle (2) elektrisch mit dem Generator verbunden, um von dem Generator die Ladeleistung (Pload) zu erhalten, die einen bestimmten Lastwert annimmt, um die sekundäre Stromversorgungsquelle (2) wieder aufzuladen;
und wobei der Lastwert so angepasst wird, dass der Hauptwert, der dem Lastwert entspricht, im optimalen Leistungsbereich (P1opt) liegt, wobei der Generator dann in seinem optimalen Leistungsbereich (P1opt) arbeitet.

5. Automatisches Verfahren (100) nach den Ansprüchen 1 bis 4, wobei das automatische Verfahren (100) mindestens umfasst:
- einen Vergleichsschritt (Q1), in dem der Betriebswert der Betriebsleistung (PF) mit dem maximalen optimalen Wert (P1opt_max) verglichen wird,
- einen Vergleichsschritt (Q2; Q5; Q6), in dem der Ladezustand (C) mit dem ersten Ladeschwellenwert (C1) und/oder dem zweiten Ladeschwellenwert (C2) und/oder dem maximalen Ladezustand (Cmax) verglichen wird;
- einen Auswahlschritt (ES) für den Leistungsverwaltungsmodus aus dem Hauptmodus (MM), dem Mischmodus (XM), dem Hybridmodus (HM) und dem Lademodus (CM) basierend auf den Vergleichsergebnissen der Vergleichsschritte (Q1; Q2; Q5; Q6).

6. Automatisches Verfahren (100) nach Anspruch 5, wobei das automatische Verfahren (100) auch einen Vergleichsschritt (Q3) umfasst, bei dem der Betriebswert der Betriebsleistung (PF) mit dem minimalen optimalen Wert (P1opt_min) verglichen wird.

7. Automatisches Verfahren (100) nach Anspruch 3, wobei im Hybridmodus (HM) der sekundäre Wert so angepasst wird, dass der Hauptwert äquivalent zum maximalen optimalen Wert (P1opt_max) ist.

8. Automatisches Verfahren (100) nach einem der vorhergehenden Ansprüche, wobei das Leistungsverhältnis zwischen 0,6 und 1,2 liegt.

9. Automatisches Verfahren (100) nach einem der vorhergehenden Ansprüche, wobei der maximale optimale Wert (P1opt_max) gleich dem kmax-Fachen des maximalen Hauptwerts (P1max) ist, wobei kmax zwischen 0,8 und 0,95 liegt.

10. Automatisches Verfahren (100) nach einem der vorhergehenden Ansprüche, wobei der minimale optimale Wert (P1opt_min) gleich dem kmin-Fachen des maximalen Hauptwerts (P1max) ist, wobei kmin nicht Null ist und von den intrinsischen Eigenschaften des Generators abhängt.

11. Automatisches Verfahren (100) nach einem der vorhergehenden Ansprüche, wobei der erste Ladeschwellenwert (C1) zwischen 50 % und 90 % des maximalen Ladezustands (Cmax) liegt.

12. Automatisches Verfahren (100) nach einem der vorhergehenden Ansprüche, wobei der zweite Ladeschwellenwert (C2) zwischen 20 % und 70 % des maximalen Ladezustands (Cmax) liegt.

13. Lasthubbaugruppe (101), umfassend:
- einen Kran (3), der mindestens mehrere elektrische Ausrüstungen und ein Kontroll- und Steuerungssystem (30) umfasst, das mit den mehreren elektrischen Ausrüstungen in Verbindung steht, wobei der Kran (3) zum Betrieb und zum Bewegen einer Last eine Betriebsleistung (PF) erfordert, die einen maximalen Betriebswert (PFmax) erreichen kann, wobei die Betriebsleistung (PF) gleich einer Summe aus Leistungen ist, die von den elektrischen Ausrüstungen angefordert werden;
- eine Hauptstromversorgungsquelle (1), die einen Generator mit einem endothermen Motor umfasst, der in der Lage ist, dem Kran (3) einen Hauptwechselstrom für eine Hauptleistung (P1) zu liefern, die einen maximalen Hauptwert (P1max) erreichen kann; wobei der Generator einen optimalen Leistungsbereich (P1opt) aufweist, der durch einen minimalen optimalen Wert (P1opt_min) und einen maximalen optimalen Wert (P1opt_max), welcher kleiner als der maximale Hauptwert (P1max) ist, begrenzt ist;
- eine sekundäre Stromversorgungsquelle (2), die mindestens eine wiederaufladbare elektrische Batterie umfasst, die einen Ladezustand (C) zwischen Null und einem maximalen Ladezustand (Cmax) aufweist und die in der Lage ist, einen sekundären Wechselstrom zum Bereitstellen einer sekundären Leistung (P2) zu liefern, und in der Lage ist, eine Ladeleistung (Pload) zum elektrischen Wiederaufladen zu erhalten;
- eine elektrischen Kopplungsschaltung (4) zwischen dem Kran (3), dem Generator und der sekundären Stromversorgungsquelle (2);
wobei das Kontroll- und Steuerungssystem (30) mit Folgendem in Verbindung steht:
- der sekundären Stromversorgungsquelle (2), um den Ladezustand (C) zu erhalten und einen sekundären Wert der sekundären Leistung (P2) und einen Ladewert der Ladeleistung (Pload) anzupassen; und
- der elektrischen Kopplungsschaltung (4), um die Kopplungen zwischen dem Kran (3), dem Generator und der sekundären Stromversorgungsquelle (2) anzusteuern;
wobei die Lasthubbaugruppe (101) **dadurch gekennzeichnet ist, dass** der Generator in Abhängigkeit von einem Leistungsverhältnis so dimensioniert ist, dass der maximale Hauptwert (P1max) gleich dem maximalen Betriebswert (PFmax) multipliziert mit dem Leistungsverhältnis ist, das kleiner als 1,2 ist, und
dass das Kontroll- und Steuerungssystem (30) ein Programm zur Umsetzung des automatischen Verfahrens (100) zur Leistungsverwaltung nach einem der vorhergehenden Ansprüche umfasst.

14. Baugruppe (101) nach Anspruch 13, wobei das Kontroll- und Steuerungssystem (30) so eingerichtet ist, dass es einen Steuerbefehl an die elektrische Kopplungsschaltung (4) sendet, die nach Empfang des Steuerbefehls so eingerichtet ist, dass sie die Hauptstromversorgungsquelle (1) mit der sekundären Stromversorgungsquelle (2), die Hauptstromversorgungsquelle (1) mit dem Kran (3) und die sekundäre Stromversorgungsquelle (2) mit dem Kran (3) elektrisch verbindet oder nicht.

15. Baugruppe (101) nach Anspruch 14, wobei das Kontroll- und Steuerungssystem (30) so eingerichtet ist, dass es den Steuerbefehl in Abhängigkeit von Vergleichsergebnissen zwischen mindestens dem Betriebswert der Betriebsleistung (PF) und dem maximalen optimalen Wert (P1opt_max) und auch in Abhängigkeit vom Lastzustand (C) sendet.

## Claims

1. An automatic method (100) of power management for supplying power to a crane (3) requiring, to operate and move a load, an operating power (PF) that can reach a maximum operating value (PFmax), which automatic method involves:
- a main power source (1) comprising a generating set provided with an endothermic engine capable of supplying the crane with a main alternating current for a main power (P1) which can reach a main maximum value (P1max); the generating set has an optimum power range (P1opt) bounded by a minimum optimum value (P1opt_min) and a maximum optimum value (P1opt_max) which is lower than the main maximum value (P1max);
- a secondary power source (2) comprising at least one rechargeable electric battery, which has a charge level (C) comprised between zero and a maximum charge level (Cmax), and which is capable of providing a secondary alternating current to deliver a secondary power (P2) and able to receive a charge power (Pload) to be electrically recharged;
the automatic method implementing a power management mode, called main mode (MM), in which the crane (3) is electrically connected to the single generating set so that it receives from the generating set the main power (P1);
the automatic method being **characterized in that** the generating set is sized according to a power ratio such that the main maximum value (P1max) is equal to the maximum operating value (PFmax) multiplied by said power ratio which is lower than 1.2;
and **in that**, in the main mode (MM), if the operating power (PF) has an operating value included in the optimum power range (P1opt) of the generating set, and if the charge level (C) is greater than a first charge threshold (C1), then the crane (3) receives from the generating set the main power (P1) which is equal to the operating value (PF), said generating set then operating in its optimum power range (P1opt).

2. The automatic method (100) according to claim 1, wherein the automatic method implements another power management mode, called mixed mode (XM), in which:
- if the operating power (PF) has an operating value non-zero and lower than the maximum optimum value (P1opt_max) and if the charge level (CL) is lower than the first charge threshold (C1), then:
- the crane (3) is electrically connected to the single generating set to receive its operating power (PF) from the single generating set, said generating set delivering its main power (P1) which has a main value; and
- the secondary power source (2) is electrically connected to the generating set to receive from the generating set the charge power (Pload) taking a given charge value, in order to recharge said secondary power source (2);
and wherein the charge value is adjusted so that the main value, which corresponds to a sum of the operating value and the charge value, is included in the optimum power range (P1opt), said generating set then operating within its optimum power range (P1opt).

3. The automatic method (100) according to any one of the preceding claims, wherein the automatic method implements another power management mode, called hybrid mode (HM), in which:
- if the operating power (PF) has an operating value which is greater than the maximum optimum value (P1opt_max), and if the charge level (C) is greater than a second charge threshold (C2), then:
- the crane (3) is electrically connected both to the generating set and to the secondary power source (2) so that the crane (3) receives:
- the secondary power (P2) coming from the secondary power source (2), said secondary power (P2) taking a given secondary value; and
- the main power (P1) coming from the generating set, said main power (P1) taking a given main value;
and wherein the secondary value is adjusted so that the main value, which corresponds to the difference between the operating value and the secondary value, is included in the optimum power range (P1opt), said generating set then operating within its optimum power range (P1opt).

4. The automatic method (100) according to any one of the preceding claims, wherein the automatic method implements another power management mode, called charge mode (CM), in which:
- if the operating power (PF) has an operating value zero, and if the charge level (C) is lower than the maximum charge threshold (Cmax), then:
- the secondary power source (2) is electrically connected to the generating set to receive from the generating set the charge power (Pload) taking a given charge value, in order to recharge said secondary power source (2);
and wherein the charge value is adjusted so that the main value, which corresponds to the charge value, is included in the optimum power range (P1opt), said generating set then operating within its optimum power range (P1opt).

5. The automatic method (100) according to claims 1 to 4, wherein the automatic method (100) comprises at least:
- a comparison step (Q1) during which the operating value of the operating power (PF) is compared with the maximum optimum value (P1opt_max),
- a comparison step (Q2; Q5; Q6) during which the charge level (C) is compared with the first charge threshold (C1) and/or the second charge threshold (C2) and/or the maximum charge level (Cmax);
- a step of selecting (ES) the power management mode from among the main mode (MM), the mixed mode (XM), the hybrid mode (HM) and the charge mode (CM), depending on the comparison results of the comparison steps (Q1; Q2; Q5; Q6).

6. The automatic method (100) according to claim 5, wherein the automatic method (100) also comprises a comparison step (Q3) during which the operating value of the operating power (PF) is compared with the minimum optimum value (P1opt_min).

7. The automatic method (100) according to claim 3, wherein, in the hybrid mode (HM), the secondary value is adjusted so that the main value is equivalent to the maximum optimum value (P1opt_max).

8. The automatic method (100) according to any one of the preceding claims, wherein the power ratio is comprised between 0.6 and 1.2.

9. The automatic method (100) according to any one of the preceding claims, wherein the maximum optimum value (P1opt_max) is equal to kmax times the main maximum value (P1max), kmax being comprised between 0.8 and 0.95.

10. The automatic method (100) according to any one of the preceding claims, wherein the minimum optimum value (P1opt_min) is equal to kmin times the main maximum value (P1max), kmin being non-zero and depending on intrinsic properties of the generating set.

11. The automatic method (100) according to any one of the preceding claims, wherein the first charge threshold (C1) is comprised between 50 and 90% of the maximum charge level (Cmax).

12. The automatic method (100) according to any one of the preceding claims, wherein the second charge threshold (C2) is comprised between 20% and 70% of the maximum charge level (Cmax).

13. A load lifting assembly (101) comprising:
- a crane (3) comprising at least several electrical apparatuses and a control-command system (30) in communication with said several electrical apparatuses, said crane (3) requiring to operate and move a load an operating power (PF) that can reach a maximum operating value (PFmax), the operating power (PF) being equal to a sum of powers demanded by the electrical apparatuses;
- a main power source (1) comprising a generating set provided with an endothermic engine capable of supplying the crane (3) with a main alternating current for a main power (P1) capable of reaching a main maximum value (P1max); the generating set being sized according to a power ratio such that the main maximum value (P1max) is equal to the maximum operating value (PFmax) multiplied by said power ratio which is lower than 1.2, and the generating set has an optimum power range (P1opt) bounded by a minimum optimum value (P1opt_min) and a maximum optimum value (P1opt_max) which is lower than the main maximum value (P1max);
- a secondary power source (2) comprising at least one rechargeable electric battery, which has a charge level (C) comprised between zero and a maximum charge level (Cmax), and which is capable of providing a secondary alternating current to deliver a secondary power (P2) and able to receive a charge power (Pload) to be electrically recharged;
- an electrical coupling circuit (4) between the crane (3), the generating set and the secondary power source (2);
wherein the control-command system (30) is in communication with:
- the secondary power source (2) to receive the charge level (C) and to adjust a secondary value of the secondary power (P2) and a charge value of the charge power (Pload); and
- the electrical coupling circuit (4) for driving couplings between the crane (3), the generating set and the secondary power source (2);
The assembly (101) being **characterized in that** the generating set is sized according to a power ratio such that the main maximum value (P1max) is equal to the maximum operating value (PFmax) multiplied by said power ratio which is lower than 1.2,
and **in that** the control-command system (30) comprises a program for implementing the automatic method (100) of power management according to any one of the preceding claims.

14. The assembly (101) according to claim 13, wherein the control-command system (30) is configured to send a control order to the electrical coupling circuit (4), which is configured on receipt of the control order to link or not electrically the main power source (1) to the secondary power source (2), the main power source (1) to the crane (3), and the secondary power source (2) to the crane (3).

15. The assembly (101) according to claim 14, wherein the control-command system (30) is configured to send the control order depending on results of comparison between at least the operating value of the operating power (PF) and the maximum optimum value (P1opt_max), and also depending on the charge level (C).
